# EUROPEAN PATENT APPLICATION

(11) **EP 4 741 974 A1**
(43) Date of publication of application: **13.05.2026**
(21) Application number: 25215370.5
(22) Date of filing: 12.11.2025
(51) Int. Cl.: G05D 1/243, G05D 1/646, E02F 9/20

(54) **VEHICLE CONTROL USING DITHERING**

(30) Priority: 12.11.2024 US 202463719266 P
(71) Applicant: Deere & Company, Moline, IL 61265 (US)
(72) Inventor: SRIPADAM, Maya Devi, Monte Sereno, CA (US); CHAWLA, Sumit, San Carlos, CA (US); OSTROWSKI, James Patrick, Mountain View, CA (US); RIKOVITCH, Nir, Sunnyvale, CA (US)
(74) Representative: Scintilla Intellectual Property Ltd

(57) **Abstract**

A construction vehicle may move (510) along a route in a construction environment towards a portion of the construction environment. The construction vehicle may access an image (520) of the portion of the construction environment in front of the construction vehicle. The construction vehicle may apply a rut identification model (530) to the image, where the rut identification model is configured to identify a rut in the portion of the construction environment using pixels of the image. The construction vehicle may, subsequent to identifying the rut in the portion of the construction environment, navigate the construction vehicle (540) along the route based on the identified rut.

## Description

### CROSS-REFERENCE TO RELATED APPLICATION

This application claims priority to U.S. Provisional Patent Application Serial No. 63/719,266, "Vehicle Control Using Dithering," filed on November 12, 2024, the subject matter of which is incorporated herein by reference in its entirety.

### BACKGROUND

### FIELD OF DISCLOSURE

This disclosure generally relates to operating vehicles in an environment and, more specifically, to operating vehicles based on ruts identified in the environment.

### DESCRIPTION OF THE RELATED ART

Ruts in (e.g., dirt and gravel) roads are typically formed due to repeated traffic and weathering over time. Ruts can adversely impact both transportation efficiency and safety. Ruts create an uneven road surface, which can lead to reduced ease of vehicle navigation, slower transportation times, and an increased risk of traffic accidents or the vehicle getting stuck. In extreme cases, deep ruts can even result in certain roads becoming untraversable.

### SUMMARY

A vehicle (e.g., an autonomous or semi-autonomous vehicle) may be controlled such that an offset value is applied as it travels along a route from a starting location to a destination. By applying (e.g., different or varied) offset values to vehicles traveling along a given road, rut formation on the road may be reduced or eliminated. Said differently, instead of the vehicles following the same path on a road portion, the offset values vary the paths on the road portion such that rut formation is reduced or eliminated (e.g., by avoiding pre-existing ruts and preventing or reducing the formation of new ruts). Among other advantages, avoiding existing ruts in a road and/or reducing or preventing road degradation (e.g., rut formation) via an offset may (a) reduce wear and tear on the tires and/or (b) reduce the work used to correct or maintain roads (e.g., smooth out ruts). Thus, an offset value may extend the life of a road and reduce costs of road correction and maintenance.

Some embodiments relate to a method of operating a construction vehicle in a construction environment, the method including: moving, by the construction vehicle, along a route in the construction environment towards a portion of the construction environment; accessing an image of the portion of the construction environment in front of the construction vehicle (e.g., the image was captured by an image sensor of the construction vehicle); applying a rut identification model to the image, the rut identification model configured to: identify a rut in the portion of the construction environment using pixels of the image (e.g., the rut extends along the route in the portion of the environment); and subsequent (e.g., responsive) to identifying the rut in the portion of the construction environment, navigating the construction vehicle along the route based on the identified rut.

In some embodiments, navigating the construction vehicle along the route based on the identified rut includes navigating the construction vehicle such that a locomotion mechanism enters the identified rut (e.g., and continues to stay in the rut as the construction vehicle traverses the environment).

In some embodiments, navigating the construction vehicle along the route based on the identified rut includes navigating the construction vehicle such that a locomotion mechanism avoids the identified rut (e.g., the vehicle does not enter and possibly continues to not enter the rut as the construction vehicle traverses the environment).

In some embodiments, navigating the construction vehicle along the route based on the identified rut includes: navigating the construction vehicle to travel at an offset value from the route, wherein the offset value is based on (e.g., the location of) the identified rut (e.g., such that a locomotion mechanism enters, partially enters, is positioned along the boundary of, or does not enter the rut).

In some embodiments, the method further includes: dynamically (e.g., in real-time) updating the offset value from the route based on a location of the rut in the portion of the construction environment (e.g., relative to the route and/or relative to the construction vehicle)(e.g., the location of the rut is determined based on the rut identified in subsequent images).

In some embodiments, the offset value is further based on a random value.

In some embodiments, the offset value from the route is further based on a second offset value from the route that a second vehicle previously traveled, wherein the offset value from the route is different than the second offset value from the route.

In some embodiments, the offset value from the route directs a locomotion mechanism of the construction vehicle to push material into the identified rut.

In some embodiments, moving, by the construction vehicle, along the route in the construction environment towards the portion of the construction environment includes the construction vehicle moving at a first offset value from the route; and navigating the construction vehicle along the route based on the identified rut includes navigating the construction vehicle to travel at a second offset value from the route different than the first offset value, wherein the second offset value is based on the (e.g., location of the) identified rut (e.g., such that a locomotion mechanism enters, partially enters, is positioned along the boundary of, or does not enter the rut).

In some embodiments, the method further includes: (e.g., as the construction vehicle traversed through the portion of the construction environment) accessing sensor data generated from an inertial measurement unit (IMU) of the construction vehicle; and identifying, based on the sensor data, whether the construction vehicle has entered the rut, wherein navigating the construction vehicle along the route is further based on the identification of whether the construction vehicle entered the rut.

Other aspects include components, devices, systems, improvements, methods, processes, applications, (e.g., non-transitory) computer readable mediums, and other technologies related to any of the above.

### BRIEF DESCRIPTION OF DRAWINGS

FIG. 1A illustrates a block diagram of a vehicle that performs actions of a treatment plan, in accordance with an example embodiment.
FIG. 1B illustrates an isometric view of a farming vehicle, in accordance with an example embodiment.
FIG. 1C illustrates a top view of the farming vehicle in FIG. 1B, in accordance with the example embodiment.
FIG. 1D illustrates an isometric view of a second farming vehicle, in accordance with an example embodiment.
FIG. 1E illustrates an isometric view of a construction vehicle, in accordance with an example embodiment.
FIG. 1F illustrates an isometric view of a second construction vehicle, in accordance with an example embodiment.
FIG. 1G illustrates a side view of a forestry vehicle, in accordance with an example embodiment.
FIG. 1H illustrates an example landscaping vehicle 100F from a top view, according to an embodiment.
FIG. 1I illustrates an example landscaping vehicle 100F for a side view, according to an embodiment.
FIG. 2A is a front view of a farming machine, in accordance with an example embodiment.
FIG. 2B is an isometric view of a farming machine, in accordance with an example embodiment.
FIG. 2C is a side view of a farming machine, in accordance with an example embodiment.
FIG. 2D is a top view of a farming machine, in accordance with an example embodiment.
FIG. 3 is a block diagram of a system environment of a vehicle, in accordance with an example embodiment.
FIG. 4A is a diagram of a construction vehicle moving in a construction environment, in accordance with an example embodiment.
FIG. 4B is an example image of the construction environment in front of the construction vehicle of FIG. 4A.
FIG. 4C a diagram of the construction vehicle moving in a construction environment, where dirt is at or near the edge of a rut, in accordance with an example embodiment.
FIG. 5 is a flow chart illustrating a method of operating a construction vehicle in a construction environment, in accordance with one or more example embodiments.
FIG. 6 is a block diagram illustrating components of an example machine for reading and executing instructions from a machine-readable medium, in accordance with an example embodiment.

The figures depict various embodiments for purposes of illustration only. One skilled in the art will readily recognize from the following discussion that alternative embodiments of the structures and methods illustrated herein may be employed without departing from the principles described herein.

### DETAILED DESCRIPTION

### I. INTRODUCTION

A vehicle (e.g., a farming, construction, mining, landscaping, or forestry vehicle) includes one or more sensors capturing information about the surroundings as the vehicle moves through an environment. The environment can include various objects (e.g., ground and obstructions) used to determine actions (e.g., performing a treatment action, modifying a treatment parameter, modifying an operational parameter, and modifying a sensor parameter, etc.) for the vehicle to operate in the environment.

The vehicle includes a control system that processes the information obtained by the sensors to generate corresponding actions. For example, the control system processes information to identify objects to generate corresponding treatment actions. There are many examples of a vehicle (e.g., a farming vehicle) processing visual information obtained by an image sensor coupled to the vehicle to identify and treat plants and identify and avoid obstructions. For example, the vehicle as described in U.S. Patent Application 16/126,842 titled "Semantic Segmentation to Identify and Treat Plants in a Construction environment and Verify the Plant Treatments," filed on September 10, 2018, which is hereby incorporated by reference in its entirety. The same systems and methods can be applied for a construction or landscaping vehicle configured to determine and perform treatment actions.

### II. ENVIRONMENT MANAGEMENT AND TREATMENT PLANS

### Environment Management

Managers (e.g., agricultural, construction, mining, landscaping, forestry managers) are responsible for managing operations in one or more environments. Managers work to implement an objective (e.g., a farming, construction, mining, landscaping, or forestry objective) within those environments and select from among a variety of actions (e.g., farming, construction, mining, landscaping, or forestry actions) to implement that objective. Traditionally, managers are, for example, a human (e.g., agronomist) that works the environment (e.g., agricultural field) but could also be other systems configured to manage operations within the environment. For example, a manager could be an automated machine (e.g., vehicle), a machine learned computer model, etc. In some cases, a manager may be a combination of the managers described above. For example, a manager may include a human assisted by a machine learned model and one or more automated machines.

Managers implement one or more objectives for an environment. An objective is typically a macro-level goal for an environment. For example, macro-level construction objectives may include moving and configuring building materials, excavating a constriction site, removing debris, welding building materials together, or any other suitable construction objective. However, objectives may also be a micro-level goal for the environment. For example, micro-level landscaping objectives may include digging a hole in a particular location, repairing or correcting a part of construction equipment, requesting feedback from a manager, etc. Of course, there are many possible objectives and combinations of objectives, and the previously described examples are not intended to be limiting.

Objectives are accomplished (at least in part) by one or more vehicles performing a series of actions. Example, vehicles are described in greater detail below. Actions (e.g., farming, construction, mining, landscaping, or forestry actions) are any operation implementable by a vehicle within the environment that works towards an objective. Consider, for example, a construction objective of building a fountain. This construction objective requires a litany of treatment actions, e.g., excavating a site for the foundation of the fountain, installing plumbing, assembling and joining pieces of material, etc. Similarly, each construction action pertaining to building the fountain may be a construction objective in and of itself. For instance, installing plumbing for the fountain can require its own set of construction actions, e.g., digging in the ground, laying pipes, welding pipes, etc.

In other words, managers implement a treatment plan (e.g., farming, construction, mining, landscaping, or forestry treatment plan) in the environment to accomplish an objective. A treatment plan is a hierarchical set of macro-level or micro-level objectives that accomplish the objective of the manager. Within a treatment plan, each macro or micro-objective may require a set of actions to accomplish, or each macro or micro-objective may be an action itself. So, to expand, the treatment plan is a temporally sequenced set of actions to apply to the environment that the manager expects will accomplish the objective.

When executing a treatment plan in an environment, the treatment plan itself or its constituent objectives and actions have various results. A result is a representation as to whether, or how well, a vehicle accomplished the treatment plan, objective, or action. A result may be a qualitative measure such as "accomplished" or "not accomplished," or may be a quantitative measure such as "35% built." Results can also be positive or negative, depending on the configuration of the vehicle or the implementation of the treatment plan. Moreover, results can be measured by sensors of the vehicle, input by managers, or accessed from a datastore or a network.

Traditionally, managers have leveraged their experience, expertise, and technical knowledge when implementing actions in a treatment plan. In a first example, a manager may spot check dryness of the ground to determine whether concrete can be laid for a foundation. In a second example, a manager may refer to previous implementations of a treatment plan to determine the best time to build a house to avoid the rainy season. In a third example, a manager may rely on established best practices in determining a specific set of treatment actions to perform in a treatment plan to accomplish a construction objective.

Leveraging manager and historical knowledge to make decisions for a treatment plan affects both spatial and temporal characteristics of a treatment plan. For example, construction actions in a treatment plan have historically been applied to an entire environment (e.g., building site) rather than small portions of the environment. To illustrate this example further, when a manager decides to install insulation, they install all of the insulation required for the project instead of just one wall. Similarly, each action in a sequence of actions of a treatment plan are historically performed at approximately the same time. For example, when a manager decides to install electrical wiring in a building, the electrical wiring would be installed within a set time range rather than sporadically.

Notably though, vehicles have greatly advanced in their capabilities. For example, vehicles continue to become more autonomous, include an increasing number of sensors and measurement devices, employ higher amounts of processing power and connectivity, and implement various machine vision algorithms to enable managers to successfully implement a treatment plan.

Because of this increase in capability, managers are no longer limited to spatially and temporally monolithic implementations of actions in a treatment plan. Instead, managers may leverage advanced capabilities of vehicles to implement treatment plans that are highly localized and determined by real-time measurements in the environment. In other words, rather than a manager applying a "best guess" treatment plan to an entire environment, they can implement individualized and informed treatment plans for each plant in the environment.

### III. EXAMPLE VEHICLES

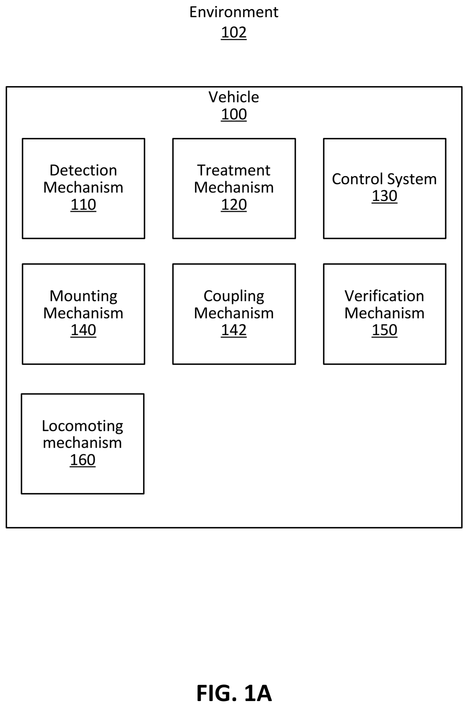

FIG. 1A is a block diagram of a vehicle 100 (also referred to as a work vehicle) that performs actions of a treatment plan, according to an example embodiment. The vehicle 100 may be a vehicle used for farming (e.g., a tractor), construction (e.g., a motor grader, road building equipment (e.g., a milling machine)), mining (e.g., a dragline excavator), landscaping (e.g., a mower), or forestry (e.g., a forwarder). In the example of FIG. 1A, the vehicle 100 includes a detection mechanism 110, a treatment mechanism 120, a control system 130, a mounting mechanism 140, a coupling mechanism 142, and a verification mechanism 150. The described components and functions of the vehicle 100 are just examples, and a vehicle can have different or additional components and functions other than those described below. For example, the vehicle may also include a power source, digital memory, communication apparatus, or any other suitable component that enables the vehicle 100 to implement actions in a treatment plan.

### Operating Environment

The vehicle 100 operates in an operating environment 102 (also referred to as the environment 102 or the external environment 102). The environment 102 is a geographic area where the vehicle 100 implements actions of a treatment plan. Example environments include a farming field (indoor or outdoor), a construction site, lawn, a mining area, and a forest. An environment may include any number of environment portions. An environment portion is a subunit of an environment. The vehicle 100 can execute different actions for different environment portions. Moreover, an environment and an environment portion are largely interchangeable in the context of the methods and systems described herein. That is, treatment plans and their corresponding actions may be applied to an entire environment or an environment portion depending on the circumstances at play.

The operating environment 102 may include the ground and objects in, on, or above the ground. As such, actions the vehicle 100 implements as part of a treatment plan may be applied to the ground. The ground may include soil but can alternatively include sponge or any other suitable ground type.

### Detection mechanism(s)

The vehicle 100 may include a detection mechanism 110. The detection mechanism 110 identifies objects in the operating environment 102 of the vehicle 100. To do so, the detection mechanism 110 obtains information describing the environment 102 (e.g., sensor or image data), and processes that information to identify pertinent objects (e.g., plants, the ground, building materials, persons, etc.) in the operating environment 102. Identifying objects in the environment 102 further enables the vehicle 100 to implement actions in the environment.

The vehicle 100 can include any number or type of detection mechanism 110 that may aid in determining and implementing actions. In some embodiments, the detection mechanism 110 includes one or more sensors. For example, the detection mechanism 110 can include a multispectral camera, a stereo camera, a CCD camera, a single lens camera, a CMOS camera, hyperspectral imaging system, LIDAR system (light detection and ranging system), a depth sensing system, dynamometer, IR camera, thermal camera, humidity sensor, light sensor, temperature sensor, or any other suitable sensor. Further, the detection mechanism 110 may include an array of sensors (e.g., an array of cameras) configured to capture information about the environment 102 surrounding the vehicle 100. For example, the detection mechanism 110 may include an array of cameras configured to capture an array of pictures representing the environment 102 surrounding the vehicle 100. The detection mechanism 110 may also be a sensor that measures a state of the vehicle 100. For example, the detection mechanism 110 may be a speed sensor, a heat sensor, or some other sensor that can monitor the state of a component of the vehicle 100.

A detection mechanism 110 may be mounted at any point on the mounting mechanism 140. Depending on where the detection mechanism 110 is mounted relative to the treatment mechanism 120, one or the other may pass over a geographic area in the environment before the other. For example, the detection mechanism 110 may be positioned on the mounting mechanism 140 such that it traverses over a geographic location before the treatment mechanism 120 as the vehicle 100 moves through the environment. In another examples, the detection mechanism 110 is positioned to the mounting mechanism 140 such that the two traverse over a geographic location at substantially the same time as the vehicle 100 moves through the environment. Similarly, the detection mechanism 110 may be positioned on the mounting mechanism 140 such that the treatment mechanism 120 traverses over a geographic location before the detection mechanism 110 as the vehicle 100 moves through the environment. The detection mechanism 110 may be statically mounted to the mounting mechanism 140 or may be removably or dynamically coupled to the mounting mechanism 140. In other examples, the detection mechanism 110 may be mounted to some other surface of the vehicle 100 or may be incorporated into another component of the vehicle 100.

### Verification mechanism(s)

The vehicle 100 may include a verification mechanism 150. Generally, the verification mechanism 150 records a measurement of the operating environment 102 and the vehicle 100 may use the recorded measurement to verify or determine the extent of an implemented action (i.e., a result of the action).

To illustrate, consider an example where a vehicle 100 implements an action based on a measurement of the operating environment 102 by the detection mechanism 110. The verification mechanism 150 records a measurement of the same geographic area measured by the detection mechanism 110 and where vehicle 100 implemented the determined action. The vehicle 100 then processes the recorded measurement to determine the result of the action. For example, the verification mechanism 150 may record an image of an object (e.g., tree) in a geographic region identified by the detection mechanism 110 and treated by a treatment mechanism 120. The vehicle 100 may apply a treatment detection algorithm to the recorded image to determine the result of the treatment applied to (or around) the object.

Information recorded by the verification mechanism 150 can also be used to empirically determine operation parameters of the vehicle 100 that will obtain the desired effects of implemented actions (e.g., to calibrate the vehicle 100, to modify treatment plans, etc.). For instance, the vehicle 100 may apply a calibration detection algorithm to a measurement recorded by the vehicle 100. In this case, the vehicle 100 determines whether the actual effects of an implemented action are the same as its intended effects. If the effects of the implemented action are different than its intended effects, the vehicle 100 may perform a calibration process. The calibration process changes operation parameters of the vehicle 100 such that effects of future implemented actions are the same as their intended effects. To illustrate, consider the previous example where the vehicle 100 recorded an image of a treated object (e.g., a tree). There, the vehicle 100 may apply a calibration algorithm to the recorded image to determine whether the treatment is appropriately calibrated (e.g., at its intended location in the operating environment 102). If the vehicle 100 determines that the vehicle 100 is not calibrated (e.g., the applied treatment is at an incorrect location), the vehicle 100 may calibrate itself such that future treatments are in the correct location. Other example calibrations are also possible.

The verification mechanism 150 can have various configurations. For example, the verification mechanism 150 can be substantially similar (e.g., be the same type of mechanism as) the detection mechanism 110 or can be different from the detection mechanism 110. In some cases, the detection mechanism 110 and the verification mechanism 150 may be one in the same (e.g., the same sensor). In an example configuration, the verification mechanism 150 is positioned distal the detection mechanism 110 relative the direction of travel 115, and the treatment mechanism 120 is positioned there between. In this configuration, the verification mechanism 150 traverses over a geographic location in the operating environment 102 after the treatment mechanism 120 and the detection mechanism 110. However, the mounting mechanism 140 can retain the relative positions of the system components in any other suitable configuration. In some configurations, the verification mechanism 150 can be included in other components of the vehicle 100.

The vehicle 100 can include any number or type of verification mechanism 150. In some embodiments, the verification mechanism 150 includes one or more sensors. For example, the verification mechanism 150 can include a multispectral camera, a stereo camera, a CCD camera, a single lens camera, a CMOS camera, hyperspectral imaging system, LIDAR system (light detection and ranging system), a depth sensing system, dynamometer, IR camera, thermal camera, humidity sensor, light sensor, temperature sensor, or any other suitable sensor. Further, the verification mechanism 150 may include an array of sensors (e.g., an array of cameras) configured to capture information about the environment 102 surrounding the vehicle 100. For example, the verification mechanism 150 may include an array of cameras configured to capture an array of pictures representing the operating environment 102.

### Treatment mechanism(s)

The vehicle 100 may include a treatment mechanism 120. The treatment mechanism 120 can implement actions in the operating environment 102 of a vehicle 100 (although not all actions need to be performed by the treatment mechanism 120). For instance, a vehicle 100 may include a treatment mechanism 120 that applies a treatment to an object in the operating environment 102. More generally, the vehicle 100 employs the treatment mechanism 120 to apply a treatment to a treatment area, and the treatment area may include anything within the operating environment 102 (e.g., a plant or the ground). In other words, the treatment area may be any portion of the operating environment 102.

If a treatment is a plant treatment, the treatment mechanism 120 applies a treatment to a plant in the environment. The treatment mechanism 120 may apply treatments to identified plants or non-identified plants. For example, the vehicle 100 may identify and treat a specific plant in the environment. Alternatively, or additionally, the vehicle 100 may identify some other trigger that indicates a plant treatment and the treatment mechanism 120 may apply a plant treatment. Some example plant treatment mechanisms 120 include: one or more spray nozzles, one or more electromagnetic energy sources (e.g., a laser), one or more physical implements configured to manipulate plants, but other plant treatment mechanisms 120 are also possible.

If the treatment is a ground treatment, the treatment mechanism 120 applies a treatment to some portion of the ground in the environment. The treatment mechanism 120 may apply treatments to identified areas of the ground, or non-identified areas of the ground. For example, the vehicle 100 may identify and treat an area of ground in the environment. Alternatively, or additionally, the vehicle 100 may identify some other trigger that indicates a ground treatment and the treatment mechanism 120 may apply a treatment to the ground. Some example treatment mechanisms 120 configured for applying treatments to the ground include: one or more spray nozzles, one or more electromagnetic energy sources, one or more physical implements configured to manipulate the ground (e.g., an excavator tool or pile driver tool), but other ground treatment mechanisms 120 are also possible.

Of course, the vehicle 100 is not limited to treatment mechanisms 120 for plants and the ground. The vehicle 100 may include treatment mechanisms 120 for applying various other treatments to objects in the environment.

Depending on the configuration, the vehicle 100 may include various numbers of treatment mechanisms 120 (e.g., 1, 2, 5, 20, 60, etc.). A treatment mechanism 120 may be fixed (e.g., statically coupled) to the mounting mechanism 140 or attached to the vehicle 100. Alternatively, or additionally, a treatment mechanism 120 may be movable (e.g., translatable, rotatable, etc.) on the vehicle 100. In one configuration, the vehicle 100 includes a single treatment mechanism 120. In this case, the treatment mechanism 120 may be actuatable to align the treatment mechanism 120 to a treatment area 122. In a second variation, the vehicle 100 includes a treatment mechanism 120 assembly comprising an array of treatment mechanisms 120. In this configuration, a treatment mechanism 120 may be a single treatment mechanism 120, a combination of treatment mechanisms 120, or the treatment mechanism 120 assembly. Thus, either a single treatment mechanism 120, a combination of treatment mechanisms 120, or the entire assembly may be selected to apply a treatment to a treatment area. Similarly, either the single, combination, or entire assembly may be actuated to align with a treatment area, as needed. In some configurations, the vehicle 100 may align a treatment mechanism 120 with an identified object in the operating environment 102. That is, the vehicle 100 may identify an object in the operating environment 102 and actuate the treatment mechanism 120 such that its treatment area aligns with the identified object.

A treatment mechanism 120 may be operable between a standby mode and a treatment mode. In the standby mode the treatment mechanism 120 does not apply a treatment, and in the treatment mode the treatment mechanism 120 is controlled by the control system 130 to apply the treatment. However, the treatment mechanism 120 can be operable in any other suitable number of operation modes.

### Control system(s)

The vehicle 100 includes a control system 130. The control system 130 controls operation of the various components and systems on the vehicle 100. For instance, the control system 130 can obtain information about the operating environment 102, processes that information to identify an action to implement, and implement the identified action with system components of the vehicle 100.

The control system 130 can receive information from the detection mechanism 110, the verification mechanism 150, the treatment mechanism 120, or any other component or system of the vehicle 100. For example, the control system 130 may receive measurements from the detection mechanism 110 or verification mechanism 150, or information relating to the state of a treatment mechanism 120 or implemented actions from a verification mechanism 150. Other information is also possible.

Similarly, the control system 130 can provide input to the detection mechanism 110, the verification mechanism 150, or the treatment mechanism 120. For instance, the control system 130 may be configured to input and control operating parameters of the vehicle 100 (e.g., speed or direction). Similarly, the control system 130 may be configured to input and control operating parameters of the detection mechanism 110 or verification mechanism 150. Operating parameters of the detection mechanism 110 or verification mechanism 150 may include processing time, location, or angle of the detection mechanism 110, image capture intervals, image capture settings, etc. Other inputs are also possible. The control system may be configured to generate machine inputs for the treatment mechanism 120. That is translating an action of a treatment plan into machine instructions implementable by the treatment mechanism 120.

The control system 130 can be operated by a user operating the vehicle 100, wholly or partially autonomously, operated by a user connected to the vehicle 100 by a network, or any combination of the above. For instance, the control system 130 may be operated by a manager sitting in a cabin of the vehicle 100, or the control system 130 may be operated by a manager connected to the control system 130 via a wireless network. In another example, the control system 130 may implement an array of control algorithms, machine vision algorithms, decision algorithms, etc. that allow it to operate autonomously or partially autonomously.

The control system 130 may be implemented by a computer or a system of distributed computers. The computers may be connected in various network environments. For example, the control system 130 may be a series of computers implemented on the vehicle 100 and connected by a local area network. In another example, the control system 130 may be a series of computers implemented on the vehicle 100, in the cloud, a client device and connected by a wireless area network.

The control system 130 can apply one or more computer models to determine and implement actions in the environment. The control system 130 may be coupled to the vehicle 100 such that an operator (e.g., a driver) can interact with the control system 130. In other embodiments, the control system 130 is physically removed from the vehicle 100 and communicates with system components (e.g., detection mechanism 110, treatment mechanism 120, etc.) wirelessly.

In some configurations, the vehicle 100 may additionally include a communication apparatus, which functions to communicate (e.g., send or receive) data between the control system 130 and a set of remote devices. The communication apparatus can be a Wi-Fi communication system, a cellular communication system, a short-range communication system (e.g., Bluetooth, NFC, etc.), or any other suitable communication system.

### Other Vehicle Components

In various configurations, the vehicle 100 may include any number of additional components.

For instance, the vehicle 100 may include a mounting mechanism 140. The mounting mechanism 140 provides a mounting point for the components of the vehicle 100. That is, the mounting mechanism 140 may be a chassis or frame to which components of the vehicle 100 may be attached but could alternatively be any other suitable mounting mechanism 140. More generally, the mounting mechanism 140 statically retains and mechanically supports the positions of the detection mechanism 110, the treatment mechanism 120, and the verification mechanism 150.

The vehicle 100 may include one or more locomoting mechanisms 160 (reference label "160" may refer to a single locomoting mechanism or multiple locomoting mechanisms). The locomoting mechanisms 160 may include any number of wheels, continuous treads, tracks, articulating legs, or some other locomoting mechanism(s). For instance, the vehicle 100 may include a first set and a second set of coaxial wheels, or a first set and a second set of continuous treads. In the either example, the rotational axis of the first and second set of wheels/treads are approximately parallel. Further, each set may be arranged along opposing sides of the vehicle 100. Typically, the locomoting mechanisms 160 are attached to a drive mechanism that causes the locomoting mechanisms 160 to translate the vehicle 100 through the operating environment 102. For instance, the vehicle 100 may include a drive train for rotating wheels or treads. In different configurations, the vehicle 100 may include any other suitable number or combination of locomoting mechanisms 160 and drive mechanisms.

The vehicle 100 may also include one or more coupling mechanisms 142 (e.g., a hitch). The coupling mechanism 142 functions to removably or statically couple various components of the vehicle 100. For example, a coupling mechanism may attach a drive mechanism to a secondary component such that the secondary component is pulled behind the vehicle 100. In another example, a coupling mechanism may couple one or more treatment mechanisms 120 to the vehicle 100.

The vehicle 100 may additionally include a power source, which functions to power the system components, including the detection mechanism 110, control system 130, and treatment mechanism 120. The power source can be mounted to the mounting mechanism 140, can be removably coupled to the mounting mechanism 140, or can be incorporated into another system component (e.g., located on the drive mechanism). The power source can be a rechargeable power source (e.g., a set of rechargeable batteries), an energy harvesting power source (e.g., a solar system), a fuel consuming power source (e.g., a set of fuel cells or an internal combustion system), or any other suitable power source. In other configurations, the power source can be incorporated into any other component of the vehicle 100.

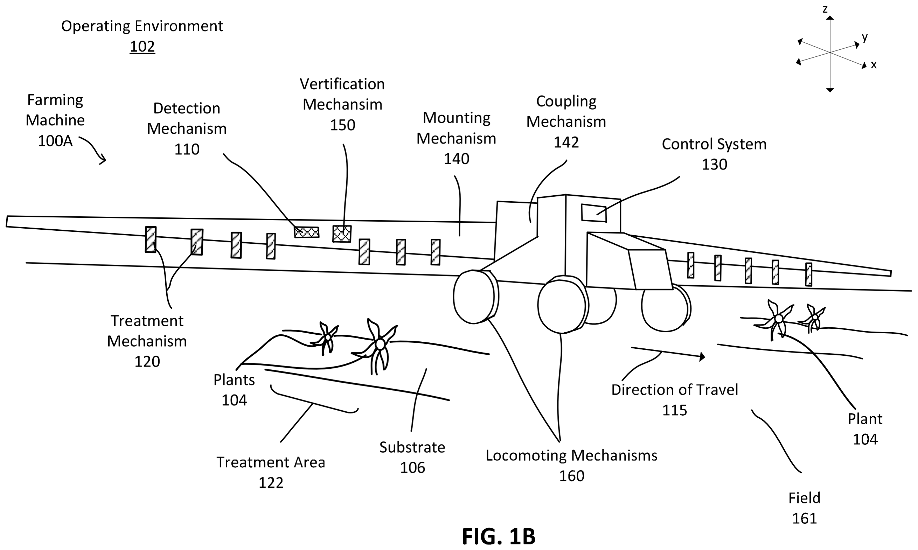

Example vehicles 100 configured for various environments are further described below with reference to FIGS. 1B-1I.

### III.A EXAMPLE FARMING VEHICLES

An example embodiment of vehicle 100 is a farming vehicle. A farming vehicle is a vehicle configured to operate in a farming environment and to accomplish (or contribute to accomplishing) one or more objectives in the farming environment. A farming action may be any operation implementable by a farming vehicle within the farming environment that works towards the one or more objectives. Farming vehicles can include a wide variety of vehicles (e.g., tractors, drapers, balers, tillers, and harvesters) which can perform a variety of farming actions (e.g., planting, spraying, weeding, pruning, and harvesting) in farming treatment plans to accomplish farming objectives (e.g., planting a field or applying a pesticide to a field). An example farming environment is a field (e.g., for growing crops).

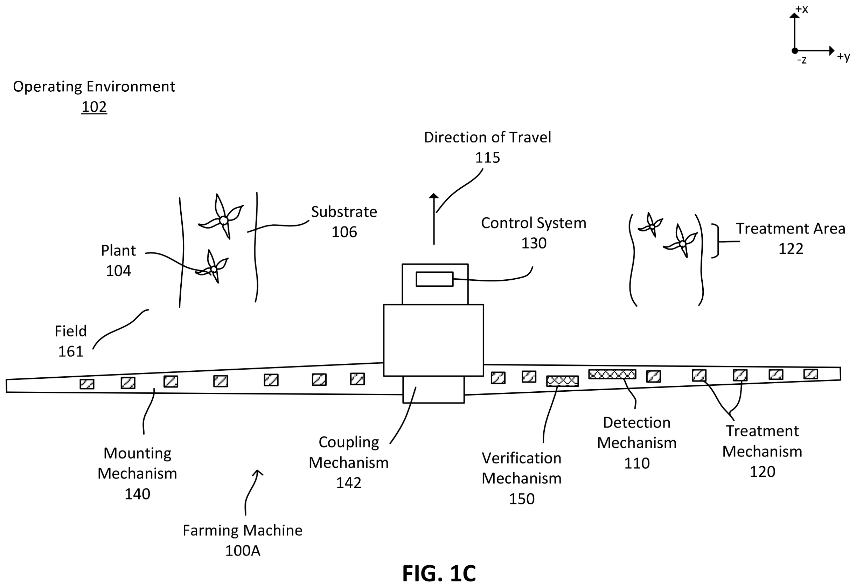

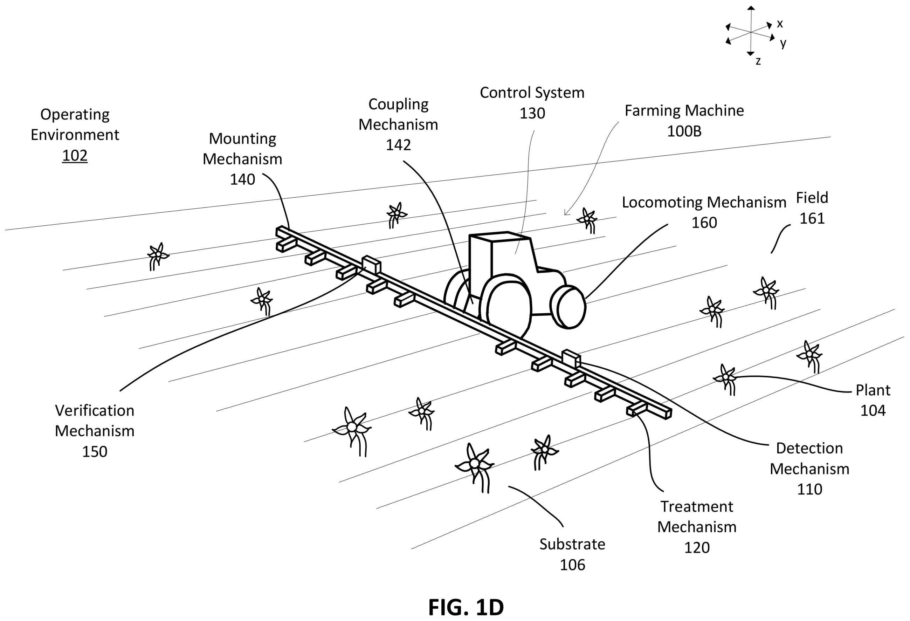

FIGS. 1B-1D illustrate example farming vehicles (100A, 100B), according to some embodiments. Specifically, FIG. 1B is an isometric view of a tractor farming vehicle 100A that performs farming actions of a treatment plan, according to one example embodiment, and FIG. 1C is a top view of the farming vehicle 100A in FIG. 1B. FIG. 1D is an isometric view of another tractor farming vehicle 100B that performs farming actions of a treatment plan, in accordance with one example embodiment. As illustrated, the farming vehicles (100A, 100B) each include a detection mechanism 110, a treatment mechanism 120, a control system 130, a mounting mechanism 140, a coupling mechanism 142, locomotion mechanisms 160, and a verification mechanism 150, which are example embodiments of the corresponding components in FIG. 1A.

The farming vehicles in FIGS. 1B-1D are each configured to implement a farming action which applies a treatment to one or more plants 104 or the ground 106 within the environment 102. A treatment farming action may be included in a treatment plan to regulate plant growth. As such, treatments may be applied directly to a single plant 104 but can alternatively be directly applied to multiple plants 104, indirectly applied to one or more plants 104, applied to the environment 102 associated with the plant 104 (e.g., soil, atmosphere, or other suitable portion of the plant's environment adjacent to or connected by an environmental factors, such as wind), or otherwise applied to the plants 104.

If the treatment is a plant treatment, the effect of treating a plant with a treatment mechanism (e.g., 120) may include any of plant necrosis, plant growth stimulation, plant portion necrosis or removal, plant portion growth stimulation, or any other suitable treatment effect. Moreover, the treatment mechanism can apply a treatment that dislodges a plant 104 from the ground 106, severs a plant 104 or portion of a plant 104 (e.g., cutting), incinerates a plant 104 or portion of a plant 104, electrically stimulates a plant 104 or portion of a plant 104, fertilizes or promotes growth (e.g., with a growth hormone) of a plant 104, waters a plant 104, applies light or some other radiation to a plant 104, or injects one or more working fluids into the ground 106 adjacent to a plant 104 (e.g., within a threshold distance from the plant). Other plant treatments are also possible. When applying a plant treatment, the treatment mechanisms may be configured to spray one or more of: an herbicide, a fungicide, insecticide, some other pesticide, or water.

In a particular example, the farming vehicle is configured to implement an action which applies a treatment that necroses the entire plant 104 (e.g., weeding) or part of the plant 104 (e.g., pruning). In this case, the action can include dislodging the plant 104 from the ground 106, incinerating a portion of the plant 104 (e.g., with directed electromagnetic energy such as a laser), applying a treatment concentration of working fluid (e.g., fertilizer, hormone, water, etc.) to the plant 104, or treating the plant 104 in any other suitable manner. In another example, a farming vehicle (e.g., 100A) is configured to implement an action which applies a treatment to regulate plant growth. Regulating plant growth can include promoting plant growth, promoting growth of a plant portion, hindering (e.g., retarding) plant 104 or plant portion growth, or otherwise controlling plant growth. Examples of regulating plant growth includes applying growth hormone to the plant 104, applying fertilizer to the plant 104 or ground 106, applying a disease treatment or insect treatment to the plant 104, electrically stimulating the plant 104, watering the plant 104, pruning the plant 104, or otherwise treating the plant 104. Plant growth can additionally be regulated by pruning, necrosing, or otherwise treating the plants 104 adjacent to the plant 104.

In the examples of FIGS. 1B-1D, the mounting mechanism 140 extends outward from a body of the farming vehicle (100A, 100B) such that the mounting mechanism 140 is approximately perpendicular to the direction of travel 115. In some configurations, the mounting mechanism 140 may include an array of treatment mechanisms 120 positioned laterally along the mounting mechanism 140. In some configurations, the farming vehicle (100A, 100B) may not include a mounting mechanism 140, the mounting mechanism 140 may be alternatively positioned, or the mounting mechanism 140 may be incorporated into any other component of the vehicle (100A, 100B).

The plants 104 can be crops but can also be weeds or any other suitable plant 104. Some example crops include cotton, lettuce, soybeans, rice, carrots, tomatoes, corn, broccoli, cabbage, potatoes, wheat, or any other suitable commercial crop. The weeds may be grasses, broadleaf weeds, thistles, or any other suitable determinantal weed. More generally, plants 104 may include a stem that is arranged superior to (e.g., above) the ground 106 and a root system joined to the stem that is located inferior to the plane of the ground 106 (e.g., below ground). The stem may support any branches, leaves, or fruits. The plant 104 can have a single stem, leaf, or fruit, multiple stems, leaves, or fruits, or any number of stems, leaves or fruits. The root system may be a tap root system or fibrous root system, and the root system may support the plant 104 position and absorb nutrients and water from the ground 106. In various examples, the plant 104 may be a vascular plant 104, non-vascular plant 104, ligneous plant 104, herbaceous plant 104, or be any suitable type of plant 104.

Plants 104 in an environment may be grown in one or more plant 104 rows (e.g., plant 104 beds). The plant 104 rows are typically parallel to one another but do not have to be. Each plant 104 row is generally spaced between 2 inches and 45 inches apart when measured in a perpendicular direction from an axis representing the plant 104 row. Plant 104 rows can have wider or narrower spacings or could have variable spacing between multiple rows (e.g., a spacing of 12 in. between a first and a second row, a spacing of 16 in. a second and a third row, etc.).

Plants 104 within an environment may include the same type of crop (e.g., same genus, same species, etc.). For example, each portion in an environment may include corn crops. However, the plants 104 within each environment may also include multiple crops (e.g., a first, a second crop, etc.). For example, some environment portions may include lettuce crops while other environment portions include pig weeds, or, in another example, some environment portions may include beans while other environment portions include corn. Additionally, a single environment portion may include different types of crops. For example, a single environment portion may include a soybean plant 104 and a grass weed.

### III.B EXAMPLE CONSTRUCTION VEHICLES

Another example embodiment of vehicle 100 is a construction vehicle. A construction vehicle is a vehicle configured to operate in a construction environment and to accomplish (or contribute to accomplishing) one or more objectives in the construction environment. A construction action may be any operation implementable by a construction vehicle within the construction environment that works towards the one or more objectives. Construction vehicles can include a wide variety of vehicles (e.g., bulldozers, front loaders, dump trucks, backhoes, graders, trenchers, cranes, loaders, crawler dozers, compactors, forklifts, conveyors, and mixer trucks) which can perform a variety of construction actions (e.g., excavating, pile driving, loading objects, unloading objects, lifting objects, clearing debris, grading, and digging trenches) in construction treatment plans to accomplish construction objectives (e.g., building a road, digging a trench, digging a hole, clearing a portion of dirt, or moving dirt from point A to point B).

An example construction environment that a construction vehicle can operate in is a construction site or project site. A construction environment may be an area used to construct, repair, maintain, improve, extend, or demolish buildings, infrastructure, or industrial facilities. A construction environment may include one or more of the following: a secure perimeter to restrict unauthorized access, site access control points, office and welfare accommodation for personnel from the main contractor and other firms involved in the project team, or storage areas for materials, machinery (e.g., construction vehicles), or equipment. In some cases, a construction environment is formed when the first feature of a permanent structure has been put in place, such as pile driving, or the pouring of slabs or footings.

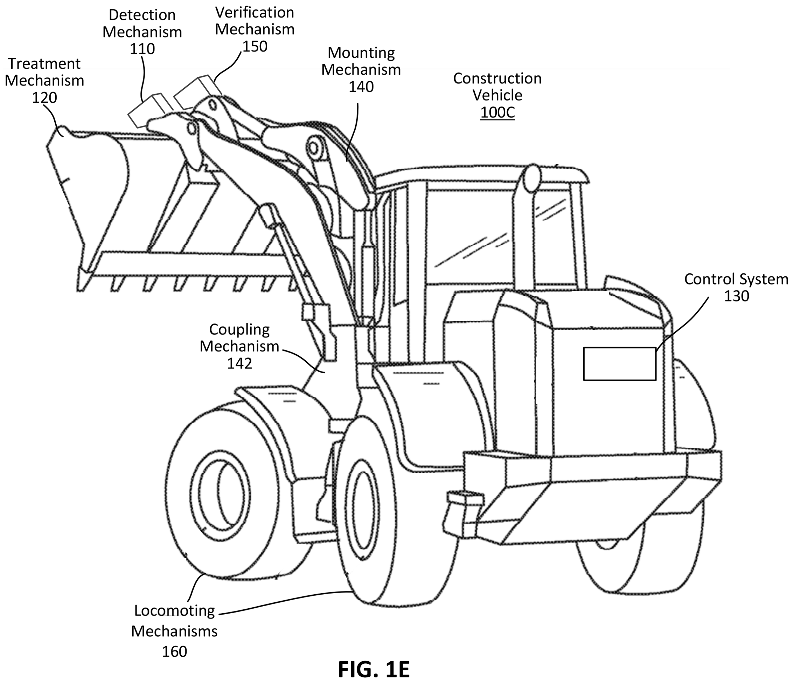

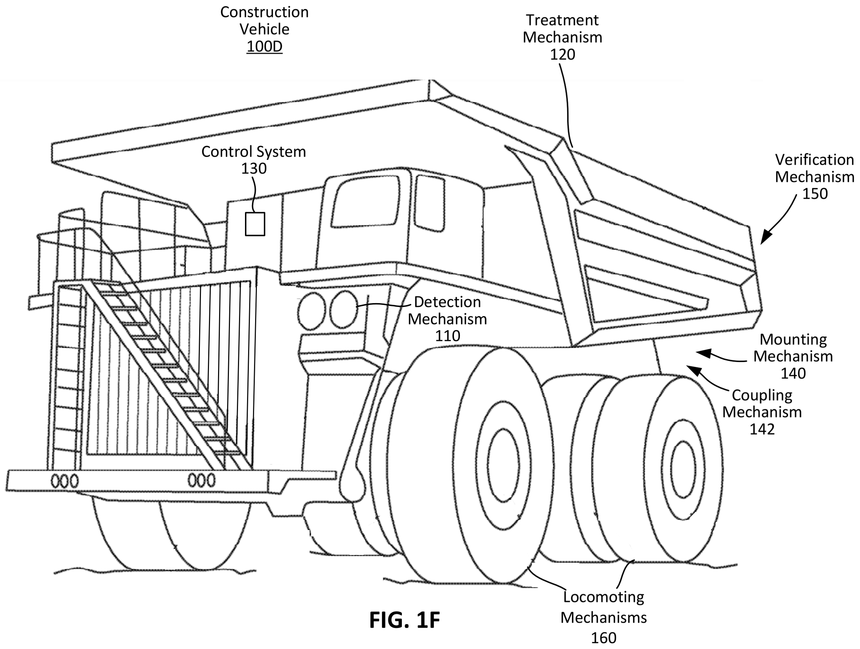

FIGS. 1E and 1F illustrate example construction vehicles (100C, 100D), according to some embodiments. Specifically, FIG. 1E is an isometric view of a wheel loader construction vehicle 100C, and FIG. 1F is an isometric view of a dump truck construction vehicle 100D. As illustrated, each construction vehicle (100C, 100D) each include a detection mechanism 110, a treatment mechanism 120, a control system 130, a mounting mechanism 140, a coupling mechanism 142, locomotion mechanisms 160, and a verification mechanism 150, which are example component embodiments of the corresponding components in FIG. 1A.

In one example situation, the loader 100C in FIG. 1E is engaged in moving material from a pile to the treatment mechanism 120 (e.g., cargo bed) of the dump truck 100D in FIG. 1F. To fill the truck 100D, the loader 100C starts by moving forward along a path to pick up a load and, once at the pile, digs the treatment mechanism 120 (e.g., bucket) into the pile to fill the treatment mechanism 120 with material. Then, the loader 100C backs away from the pile, while turning to face the dump truck 100D. Then the loader drives to the dump truck 100D, raising its treatment mechanism 120 (e.g., bucket) and dumps the material into the treatment mechanism 120 of the dump truck 100D. Afterwards, the loader 100C backs up and turns to face the pile, repeating the process. As further described below, the loader 100C may encounter ruts during any of these construction actions or before or after the completion of the objective, in between objectives, or in other scenarios. The loader 100C or the dump truck 100D may employ a control system 130 to operate in the environment.

### III.C EXAMPLE FORESTRY VEHICLES

Another example embodiment of vehicle 100 is a forestry vehicle. A forestry vehicle is a vehicle configured to operate in a forestry environment and to accomplish (or contribute to accomplishing) one or more objectives in the forestry environment. A forestry action may be any operation implementable by a forestry vehicle within the forestry environment that works towards the one or more objectives. Forestry vehicles can include a wide variety of vehicles (e.g., harvesters, skidders, feller bunchers, forwarders, and swing machines) which can perform a variety of forestry actions (e.g., felling, delimbing, bucking, forwarding, and sorting) in forestry treatment plans to accomplish forestry objectives (e.g., trimming a set of trees, felling a set of trees, or moving logs from point A to point B).

Example forestry environments that forestry vehicles can operates in include a forest, a woodland, and a logging site. A forestry environment may be an area used to create, manage, use, plant, conserve, or repair forests or woodlands. Generally, a forest is an area of land dominated by trees. For example, a forest is an area of land spanning more than 0.5 hectares with trees higher than 5 meters and a canopy cover of more than 10 percent, or trees able to reach these thresholds *in situ.* Typically, a forest does not include land that is predominantly under agricultural or urban use.

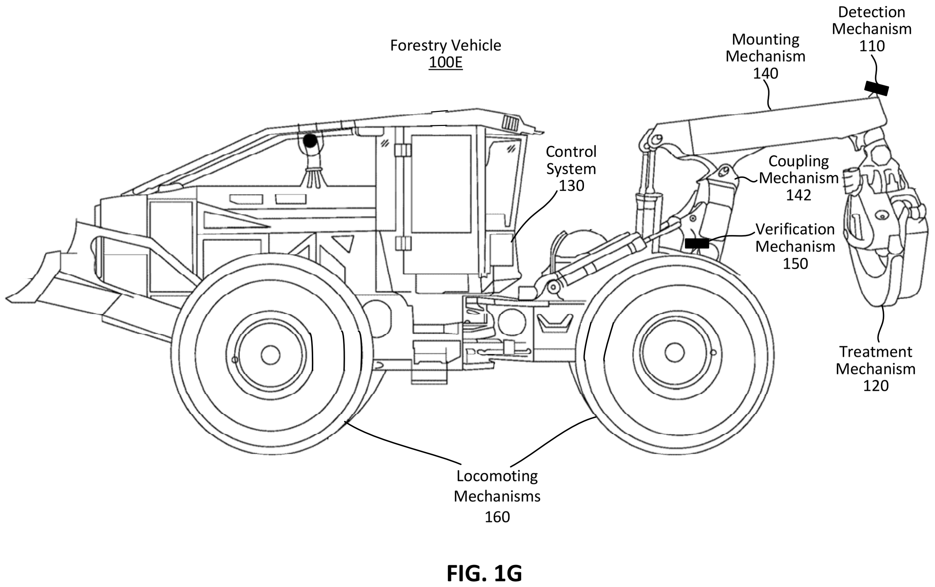

FIG. 1G illustrates an example forestry vehicle 100E, according to an embodiment. Specifically, FIG. 1G is a side view of a skidder forestry vehicle 100E. As illustrated, the forestry vehicle 100E includes a detection mechanism 110, a treatment mechanism 120, a control system 130, a mounting mechanism 140, a coupling mechanism 142, locomotion mechanisms 160, and a verification mechanism 150, which are example component embodiments of the corresponding components in FIG. 1A.

### III.D EXAMPLE LANDSCAPING VEHICLES

Another example embodiment of vehicle 100 is a landscaping vehicle. A landscaping vehicle is a vehicle configured to operate in a landscaping environment and to accomplish (or contribute to accomplishing) one or more objectives in the landscaping environment. A landscaping action may be any operation implementable by a landscaping vehicle within the landscaping environment that works towards the one or more objectives. Landscaping vehicles can include a wide variety of vehicles (e.g., mowers, chipper trucks, leaf and debris blowers) which can perform a variety of landscaping actions (e.g., mowing, trimming, leaf blowing, and shearing) in landscaping treatment plans to accomplish landscaping objectives (e.g., trimming a set of trees, mowing grass, or shearing bushes).

Example landscaping environments that landscaping vehicles can operates in include a yard, lawn, garden, and athletic field. A landscaping environment may be an area used to for recreation, social gatherings, gardening, and aesthetic purposes for a dwelling. Generally, a landscaping environment is a plot of land with grass and/or plants. Typically, a landscaping area is residential or commercial and does not include land that is predominantly under agricultural or urban use.

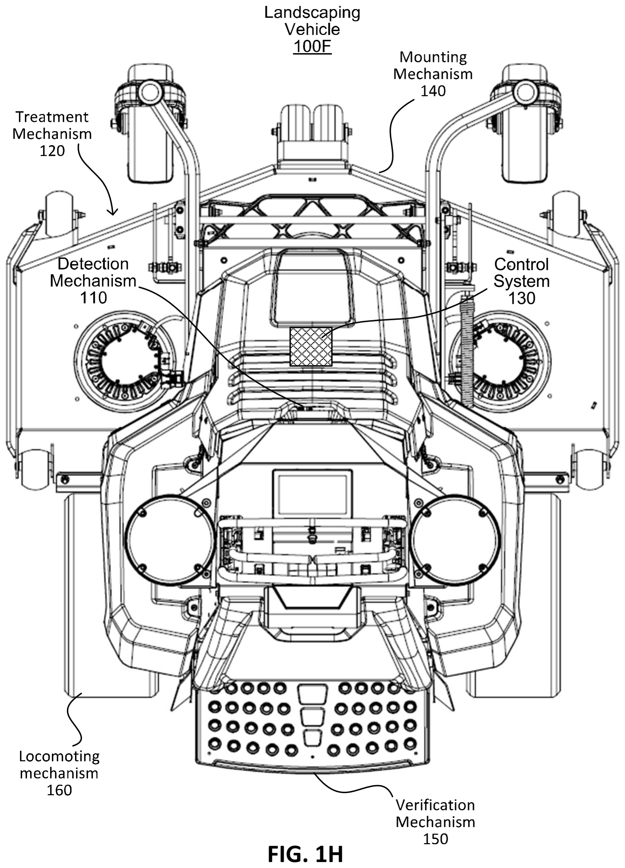

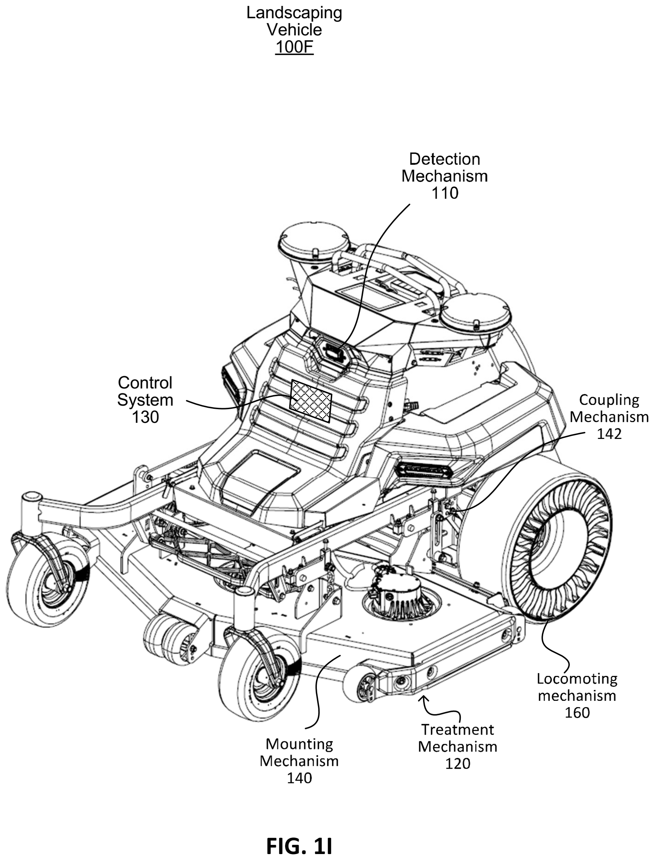

FIGS. 1H and 1I illustrate an example landscaping vehicle 100F, according to an embodiment. In the example of FIGS. 1H and 1I, the landscaping vehicle 100F is a mower. As illustrated, the landscaping vehicle 100F includes a detection mechanism 110, a treatment mechanism 120 (e.g., mower blades under the mounting mechanism 140), a control system 130, a mounting mechanism 140 (e.g., a mowing deck that houses mower blades), a coupling mechanism 142, locomotion mechanism 160, and a verification mechanism 150, which are example component embodiments of the corresponding components in FIG. 1A.

### III.E ADDITIONAL EXAMPLE FARMING VEHICLES

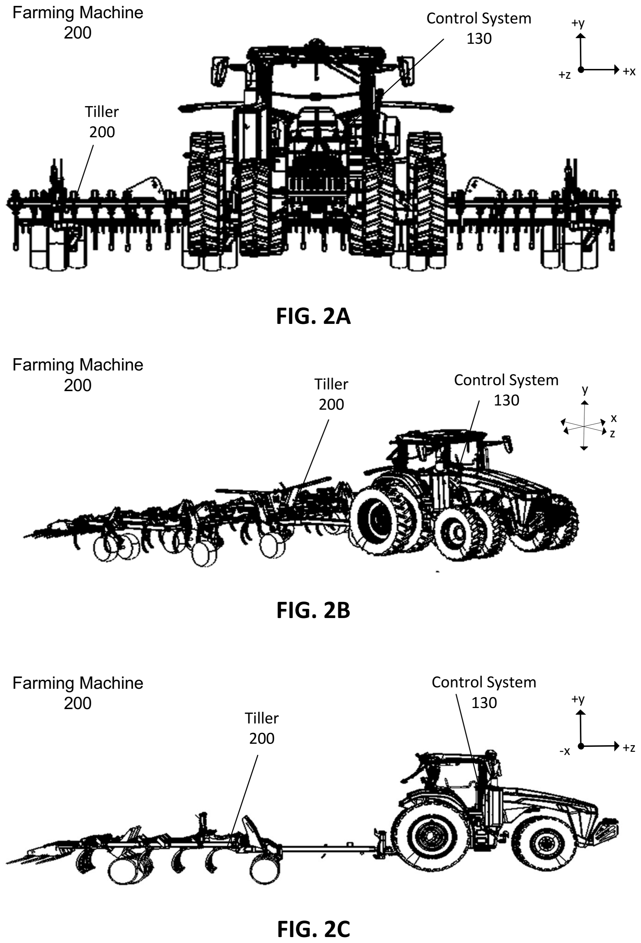

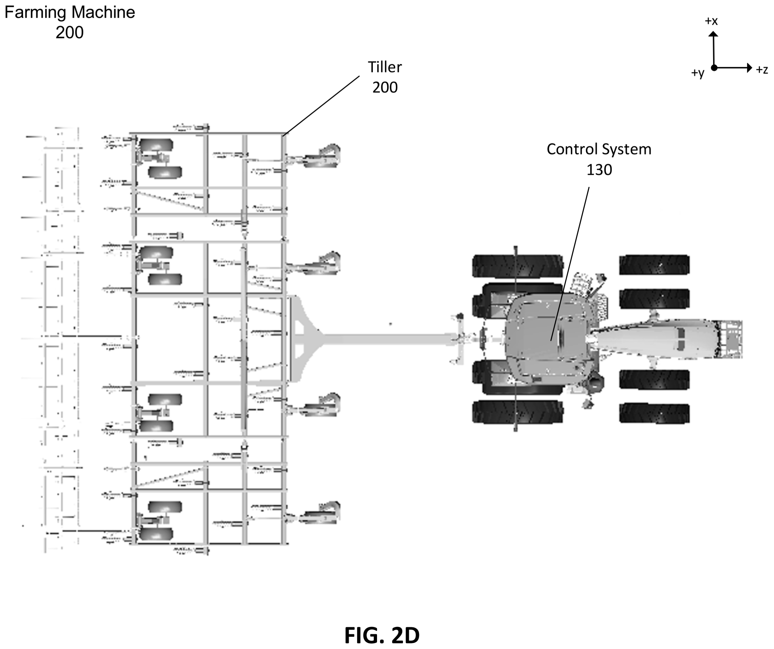

FIGS. 2A-D depict an example embodiment where a vehicle 100 is a farming machine 200 with a tiller (an example of a treatment mechanism 120), in accordance with an example embodiment. For example, FIG. 2A is a front view of the embodiment of the farming machine 200 and FIG. 2B is an isometric view of the embodiment of the farming machine 200 of FIG. 2A. FIG. 2C is a side view of the embodiment of the farming machine 200 and FIG. 2D is a top view of the embodiment of the farming machine 200.

The farming machine 200 may use field action mechanisms coupled to a tiller 200 of the farming machine to complete the field actions. The field actions may include tilling, spraying, or otherwise treating a plant or portion of the field, as previously described in relation to FIGS. 1A-1I. Further, the farming machine includes a control system 130 for controlling operations of system components of the farming machine 200 to take field actions and may include any of the other components, mechanisms, networks, and sensors previously described (e.g., any of the components described with respect to FIG. 1A).

### IV. SYSTEM ENVIRONMENT

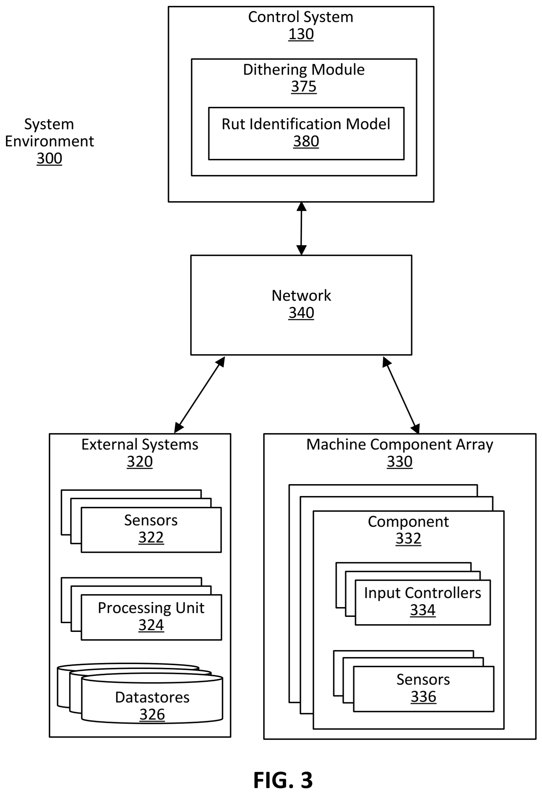

FIG. 3 is a block diagram of the system environment for the vehicle 100, in accordance with one or more example embodiments. In this example, the control system 130 is connected to external systems 320 and a machine component array 330 via a network 340 within the system environment 300.

The external systems 320 are any system that can generate data representing information useful for detecting ruts in a field. For example, an external system 320 may be a mobile device or other computer. External systems 320 may include one or more sensors 322, one or more processing units 324, and one or more datastores 326. The one or more sensors 322 can measure the field 161, the operating environment 102, the vehicle 100, etc. and generate data representing those measurements. For instance, the sensors 322 may include a rainfall sensor, a wind sensor, heat sensor, a camera, etc. The processing units 324 may process measured data to provide additional information that may aid in detecting ruts in the field. For instance, a processing unit 324 may access an image of a field 161 and calculate a weed pressure from the image or may access historical weather information for a field 161 to generate a forecast for the field. Datastores 326 store historical information regarding the vehicle 100, the operating environment 102, the field 161, etc. that may be beneficial in detecting ruts or determining a vehicle offset. The historical information may have been obtained from one or more vehicles 100 (e.g., measuring the result of a action from a first vehicle with the sensors of a second vehicle). Further, the datastore 326 may store results of specific actions in the operating environment 102, or results of actions taken in nearby environments having similar characteristics. The datastore 326 may also store historical weather, flooding, field use, planted crops, etc. for the operating environment 102 and the surrounding area. Finally, the datastores 326 may store any information measured by other components in the system environment 300.

The machine component array 330 includes one or more components 332. Components 322 are elements of the vehicle 100 that can take actions (e.g., a treatment mechanism 120). As illustrated, each component has one or more input controllers 334 and one or more sensors 336, but a component may include only sensors 336 or only input controllers 334. An input controller 334 controls the function of the component 332. For example, an input controller 334 may receive machine commands via the network 340 and actuate the component 330 in response. A sensor 326 generates data representing measurements of the operating environment 102 and provides that data to other systems and components within the system environment 300. The measurements may be of a component 332, the vehicle 100, the operating environment 102, etc. For example, a sensor 326 may measure a configuration or state of the component 322 (e.g., a setting, parameter, power load, etc.), measure conditions in the operating environment 102 (e.g., moisture, temperature, etc.), capture information representing the operating environment 102 (e.g., images, depth information, distance information), and generate data representing the measurement(s).

The control system 130 receives information from external systems 320 and the machine component array 320 and implements a plan in an environment with a vehicle. The control system 130 includes a dithering module 375, and the dithering module 375 includes a rut identification model 380. The rut identification model 380 can be applied to sensor data describing an external environment (e.g., generated by a detection mechanism 110) and can identify the presence of a rut in the sensor data (e.g., to identify a rut of at least a threshold depth). For example, the rut identification model 380 is applied to an image of the environment and identifies a rut in pixels of the image. The dithering module 375 determines an offset value from a route (that the vehicle 100 is traveling along) based on the output from the rut identification model 380. The control system 130 may then control the vehicle to travel along a modified route that is offset from the route by the offset value amount. Thus, the control system 130 enables navigation of a vehicle 100 based on ruts in an external environment. Additionally, or alternatively, regardless of the presence or absence of ruts in the environment, the dithering module 375 may determine offset values to reduce or prevent the formation of new ruts in the environment. The dithering module 375 and rut identification model 380 are further described below.

In some embodiments, the vehicle 100 includes a stereo camera system. In these embodiments, a depth map may be generated (e.g., by the rut identification model 380) based on output from the stereo camera system. The rut identification model 380 may identify ruts in the depth map (e.g., by identifying negative depths).

The rut identification model 380 may be a machine learned model, for example, a deep neural network, a convolutional neural network, or any other type of suitable machine learning model. In a more specific example, the rut identification model 380 may be a pixel model, a point cloud model, or a bounding box model. A pixel model may detect pixels in the image data that represent ruts (e.g., via pixelwise segmentation). A point cloud model may determine point clouds in the image data that represent ruts. A bounding box model may detect bounding boxes in the image data representing ruts. The bounding box model may generate bounding boxes enclosing portions of the image data that the model has identified represent ruts.

In some embodiments, the rut identification model 380 is trained to perform plane estimation. Negative depths (e.g., greater than a depth threshold) identified by the model may indicate a rut. In another example, the rut identification model 380 is trained using labeled images with ruts (e.g., and images without ruts). The labels may indicate the location of ruts in the images. T he images may be labeled by a user interacting with a user interface and/or a larger model, e.g., a multi-modal LLM, that can detect potholes or ruts and use that output as a label for the model.

Other training techniques may be to use sensor data (e.g., accelerometer data) of the image sensor (e.g., which has its own IMU) or overall vehicle motion that detects the impacts as the vehicle hits the ruts, and then associates the location where the event happened with a location in the image (through a series of geometric transformations).

In some embodiments, manual driving examples may be leveraged where the operator has driven out of the way to avoid a rut. These examples may be treated as a label, or use it as the basis for merging other information, e.g., visually or geometrically, to label a rut or pothole in an image.

In some embodiments, a combination of methods is used to identify a potential rut or pothole. Then the vehicle may drive over the rut/pothole in the path to see if other sensors such as the IMU detect it.

The dithering module 375 may include multiple rut identification models. If multiple models are used, the output with the highest confidence or reliability may be used. Alternatively, the detection outputs may be combined (e.g., using a weighted model) to determine a final rut identification output determination.

The network 340 connects nodes of the system environment 300 to allow microcontrollers and devices to communicate with each other. In some embodiments, the components are connected within the network as a Controller Area Network (CAN). In this case, within the network each element has an input and output connection, and the network 340 can translate information between the various elements. For example, the network 340 receives input information from the camera array 310 and component array 320, processes the information, and transmits the information to the control system 130. The control system 130 generates a farming action based on the information and transmits instructions to implement the farming action to the appropriate component(s) 322 of the component array 320.

Additionally, the system environment 300 may be other types of network environments and include other networks, or a combination of network environments with several networks. For example, the system environment 300, can be a network such as the Internet, a LAN, a MAN, a WAN, a mobile wired or wireless network, a private network, a virtual private network, a direct communication line, and the like.

### V. DITHERING

Ruts in roads are typically formed due to repeated traffic and weathering over time. Ruts can adversely impact both transportation efficiency and safety. Ruts create an uneven road surface, which can lead to reduced ease of vehicle navigation, slower transportation times, and an increased risk of traffic accidents or the vehicle getting stuck. In extreme cases, deep ruts can even result in certain roads becoming untraversable.

As used herein, a "rut" may refer to an elongated depression or groove in an environment that extends along the environment (e.g., by more than four feet), such as a road. As mentioned above, ruts are typically formed by locomotion mechanisms of vehicles that repeatedly traverse over the same portion of the environment and depress the portion due to the weight of the vehicle and/or naturally displace material from the portion. Ruts may also be formed or further formed by weather. Ruts can vary in depth and width depending on, for example, the material of the environment, the weather, vehicle traffic, the types of locomotion mechanisms of the vehicles, or any combination thereof.

Autonomous and semi-autonomous vehicles can contribute to accelerated new rut formation and further definition or deepening of preexisting ruts on road surfaces, especially on less durable materials such as dirt. Unlike human drivers, who naturally vary their driving path with a degree of randomness each time they travel, autonomous vehicles tend to follow the exact same path (or very similar path) on each journey. This is primarily due to their reliance on GPS and sensor data which guides them to follow pre-defined paths. This high consistency can result in quicker degradation of roads (e.g., a higher rate of soil compression and displacement), thus accelerating the formation of ruts, particularly on unpaved or dirt roads.

A vehicle (e.g., an autonomous or semi-autonomous vehicle) may be controlled such that an offset value is applied as it travels along a route from a starting location to a destination. By applying (e.g., different or varied) offset values to vehicles traveling along a given road, rut formation on the road may be reduced or eliminated. Said differently, instead of the vehicles following the same path on a road portion, the offset values vary the paths on the road portion such that rut formation is reduced or eliminated (e.g., by avoiding pre-existing ruts and preventing or reducing the formation of new ruts). An offset value may also be used to avoid obstacles, debris, or other road aberrations (e.g., potholes). Among other advantages, avoiding existing ruts in a road and/or reducing or preventing road degradation (e.g., rut formation) via an offset may (a) reduce wear and tear on the tires and/or (b) reduce the work used to correct or maintain roads (e.g., smooth out ruts). Thus, an offset value may extend the life of a road and reduce costs of road correction and maintenance.

An offset value describes a direction of deviation from a route (e.g., left or right relative to the travel direction) and a magnitude of deviation (e.g., one or two inches from the route along the deviation direction). For example, the sign of an offset value indicates the direction (e.g., "+" indicates right and "-" indicates left), and the value indicates the magnitude of deviation.

As previously described, the control system 130 of a vehicle may include a dithering module 375 that determines an offset value. The control system 130 may then apply the determined offset value as the vehicle traverses along the route. For example, a vehicle travels three inches to the right while moving along a route to a destination. If the offset value is zero (or no offset value is determined) the control system 130 may be configured to control the vehicle so that the center of the vehicle travels along the route (and/or so that locomotion mechanisms on either side of the vehicle are equidistance away from the route). However, if an offset value is non-zero, the control system 130 may control the vehicle so that the center of the vehicle travels along a modified route that is offset from the route by the offset value.

An offset value may be based on the road the vehicle is traveling on or will travel on. For example, if a vehicle is traversing a route that includes moving along two different roads, a first offset value is applied while the vehicle is on the first road and a second (e.g., different) offset value is applied while on the second road. Offset values may also be determined for different portions of the same road (e.g., if a first portion of the road has a different rut condition or susceptibility than a second portion of the road). For example, a first offset value is applied while the vehicle is on a first portion of the road and a second offset value is applied while the vehicle is on a second portion of the road.

The dithering module 375 may determine an offset value for a road portion prior to traveling on the road portion or while traveling on the road portion (e.g., in real-time). Additionally, the dithering module 375 may modify or update a previously determined offset value (e.g., in real-time) as the vehicle travels on a road portion.

An offset value may be constant, or it may be variable. For example, an offset value is a function of position on the road (or route) or distance along the road (or route). An offset value may be based on one or more characteristics of the vehicle, such as vehicle weight or tire width. For example, offset values may be determined to balance total weight received by different sections of the road. Additionally, or alternatively, an offset value for a road portion may be based on one or more characteristics of the road portion, such as road materials. For example, for roads with tougher road surfaces that are more resistant to rut formation (e.g., compacted soil or concrete), the dithering module 375 may reduce the offset value, whereas softer, more susceptible surfaces, may warrant a larger offset value. Weather may also affect an offset value. For example, if a weather condition (e.g., rain) makes a road more susceptible to rut formation, large or more varied offset values may be used. In contrast, if a weather condition makes a road less susceptible to rut formation (e.g., dry and sunny weather), smaller or less varied offset values may be used.

If a road portion includes a rut (e.g., larger than a threshold size), an alert module of the control system 130 may transmit a notification to a manager so the manager becomes aware of the rut (e.g., and the location of the rut). This may result in another vehicle being assigned to the rut to fix it. Additionally, or alternatively, the rut information may be stored in a database that can be referenced by the dithering module 375 when determining an offset value. Multiple vehicles may have access to rut information stored in a database so that they can determine offset values. The database may be used to build up a map of ruts in an environment (e.g., on a road).

An offset value may be determined differently if a road portion already includes a rut. For example, an offset value may be determined to counteract a rut that was previously formed (e.g., the offset value positions the tires to push material into the rut). If a road portion includes a rut that may be problematic for the vehicle (e.g., the rut is too deep or rough), the offset value may be determined (or adjusted) so the tires do not move into the rut. In some scenarios it may be advantageous for a vehicle to travel in a rut (e.g., the road is more stable or predictable in the rut or the vehicle can move faster or more efficiently in the rut). In these scenarios, the offset value may be determined (or adjusted) so the tires move into the rut.

An offset value may be randomized. For example, the dithering module 375 determines a randomized deviation direction (e.g., left or right relative to the travel direction), and a randomized deviation magnitude (within a maximum threshold) from the route. The maximum threshold for the magnitude deviation may be based on various factors, such as the total width of the road, distance from other lanes of traffic, speed of the vehicle, and speed of other vehicles on the road, or any combination thereof.

In some embodiments, the offset value is based on an offset value of a vehicle that previously traversed the road portion (e.g., the offset value for a vehicle in front of the current vehicle). More generally, an offset value may be based on one or more historical offset values of vehicles that previously traversed the road portion. For example, after a vehicle travels a road portion, the offset value is stored in an offset value database. When determining a new offset value (e.g., for a vehicle about to travel on the road portion), the dithering module 375 may determine the new offset value based on one or more offset values stored in the database. Additionally, or alternatively, an offset value may be based on an offset value of a vehicle expected to traverse the road portion (e.g., the offset value for a vehicle scheduled to travel the road portion later).

Offset values may be determined systematically to reduce or eliminate rut formation. For example, offset values are determined such that sections of the road receive the same amount of compaction or tire contact, perhaps in a defined cycle of path deviation. For example, a first vehicle has an offset value of one tire width to the left of the route, a second vehicle has an offset value of zero, and a third vehicle has an offset value of one tire width to the right of the route.

In some embodiments, an offset value mimics human driving behavior. For example, the dithering module 375 includes a model trained based on driving paths naturally taken by humans driving vehicles along one or more road portions.

An offset value may be based on (or adjusted based on) other vehicles on the road or obstacles in the road. For example, the offset value is determined (or modified) so that a safety bubble of the vehicle and/or safety bubbles of other vehicles on the road is respected during traversal along the route. Additionally, or alternatively, offset value may be based on (or adjusted based on) predefined virtual corridors that define the limits of where the vehicle should travel (e.g., a virtual wall on either side of a road). Thus, offset values may be limited so that the vehicle does not travel outside of a virtual corridor. Among other advantages, the corridors may reduce or prevent the vehicle from deviating too far from a route, contacting other vehicles, contacting objects or equipment in the environment, etc.

In some scenarios, it may be advantageous for a road portion to develop a rut or further develop a preexisting rut (e.g., the road may be more stable or predictable or the vehicle may be able move faster or more efficiently in the rut). In these scenarios, the dithering module 375 may determine offset values for vehicles to increase the formation rate of a rut in a road portion (e.g., by having tires repeatedly traverse the same section of a road portion). More broadly, it may be advantageous for tires of vehicles to traverse the same section of a road portion (e.g., to avoid the tires contacting other portions of the environment). Thus, the dithering module 375 may determine offset values so vehicles traverse the same section of a road portion (within an error threshold).

To determine an offset value, the dithering module 375 may receive data and determine (e.g., calculate) an offset value based on the received data. Examples of received data that may be used to determine or modify an offset value are described below.

**Route Information.** The dithering module 375 may receive route information, such as which road portion the vehicle will traverse while moving along the route. The dithering module 375 may also receive information about the road portion, such as its condition (e.g., whether a rut is present) and the material of the road portion (e.g., dirt, clay, sand, turf, asphalt, or concrete), since the material of the road can indicate how susceptible the road portion is to rut formation. Since rut formation may also depend on the weather (current or expected), the dithering module 375 may receive weather information that describes the current or expected weather at the road portion. For example, if the current weather has a higher moisture content (e.g., rain or high humidity), the control system 130 may determine larger offset values to reduce or prevent the formation of new ruts or the further formation of existing ruts (since higher moisture content may increase the likelihood of rut formation). Alternatively, if the current weather has a lower moisture content, the control system 130 may determine smaller offset values (since lower moisture content may decrease the likelihood of rut formation).

**Vehicle Information.** The dithering module 375 may receive information describing the vehicle, such as its weight, its current or expected speed on a road portion, and the widths of its tires.

**Sensor Information.** The dithering module 375 may receive information from a sensor of detection mechanism 110. For example, captured images are analyzed (e.g., by the rut identification model 380) to determine the condition of a current or an upcoming road portion (e.g., identifying whether a rut is present on an upcoming road portion or whether the road portion is susceptible to rut formation (e.g., a muddy road is more susceptible than concrete)). In another example, inertial measurement unit (IMU) data is analyzed to determine the condition of a current road portion, since vibrations of the vehicle can indicate the condition of the road portion (e.g., whether a rut is present or not). Additionally, or alternatively IMU data may be analyzed to determine if the vehicle has tilted or pitched (which may indicate a locomotion mechanism entered in a rut or is in a rut). Vehicle speed data may be used in conjunction with the IMU data as well.

In some embodiments, the control system 130 determines an offset value based on the amount of moisture in the road (moisture may be determined from sensor information e.g., by a trained model identifying moisture in pixels of images of the environment). For example, if the road has a higher moisture content (e.g., mud or puddles), the control system 130 may determine larger offset values to reduce or prevent the formation of new ruts or the further formation of existing ruts (since higher moisture content may increase the likelihood of rut formation). Alternatively, if the road has a lower moisture content (e.g., the road is dry), the control system 130 may determine smaller offset values (since lower moisture content may decrease the likelihood of rut formation).

**Historical Offset Value Information.** As previously described, the dithering module 375 may receive information describing offset values of vehicles that previously traversed a road portion or are expected to traverse a road portion.

Although the above paragraphs are described in the context of ruts these teachings are not limited to ruts. The above teachings are more broadly applicable to road degradation. For example, the dithering module 375 may be used to reduce road degradation of a freeway or highway. In another example, the above paragraphs may be applied to the context of potholes. For example, a control system may identify a pothole and navigate a vehicle based on the identified pothole (e.g., apply an offset value from the route so that a locomotion mechanism avoids an identified pothole). A pothole may refer to a depression in an environment. A pothole may have a generally circular or elliptical (e.g., with a major axis perpendicular to the path direction) shape, however this is not required. A pothole may be formed by locomotion mechanisms of vehicles that repeatedly traverse over the same portion of the environment and depress a portion of the environment due to the weight of the vehicle and/or naturally displace material from the portion. Potholes may also be formed or further formed by weather. Potholes can vary in depth and width depending on, for example, the material of the environment, the weather, vehicle traffic, the types of locomotion mechanisms of the vehicles, or any combination thereof.

Furthermore, although the above paragraphs are described in the context of tires degrading roads, these teachings are not limited to tires. The above teachings are more broadly applicable to road degradation by vehicle locomoting mechanisms 160. As previously described, example locomotion mechanisms 160 include wheels, continuous treads, articulating legs, and any combination thereof.

Furthermore, although the above paragraphs are described in the context of locomotion mechanisms 160 degrading roads, these teachings are not limited to roads. The above teachings are more broadly applicable to locomoting mechanisms 160 degrading a portion of an operating environment that a vehicle may traverse over. Example operating environments include a farming field (indoor or outdoor), a construction site, a mining area, turf, a freeway, a highway, and a forest.

### V.A EXAMPLE CONSTRUCTION VEHICLE MOVING IN CONSTRUCTION ENVIRONMENT

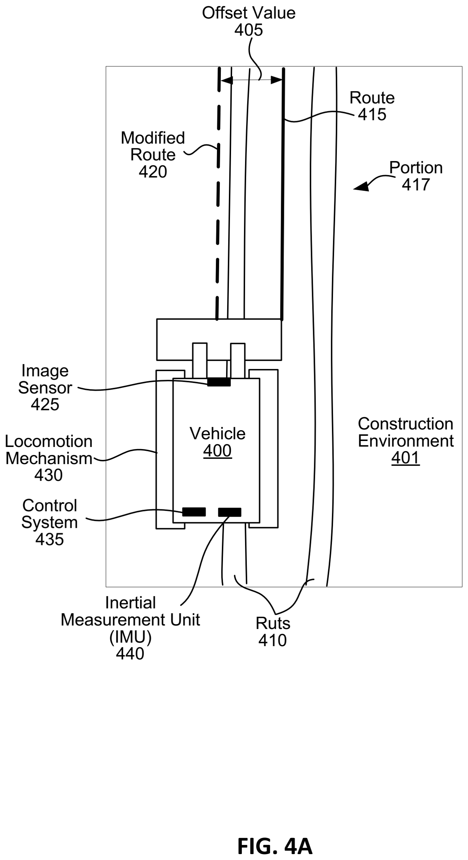

FIG. 4A is a diagram of a construction vehicle 400 moving in a construction environment 401, in accordance with an example embodiment. The construction environment 401 includes two ruts 410 that extend along a route 415 the construction vehicle 400 is expected to travel along. The construction vehicle 400 includes a control system 435 (an example of control system 130), an image sensor 425 (an example component of detection mechanism 110) facing forward, a first locomotion mechanism 430 on the left side, and a second locomotion mechanism on the right side (not labeled). Both locomotion mechanisms are examples of locomoting mechanisms 160. The construction vehicle 400 also includes an inertial measurement unit 440 (or IMU 440). An IMU (e.g., 440) is an electronic device that uses accelerometers, gyroscopes, and/or magnetometers to measure a the specific force, angular rate, and/or orientation in space of a device (e.g., the construction vehicle 400). Data from an IMU may represent the motion and orientation of the device, which can be used to track position, detect movement patterns, and analyze dynamic behavior over time.

The construction vehicle 400 is moving along a route 415 to reach a destination in the construction environment 401. However, due to the presence of the ruts 410, the control system 435 controls the construction vehicle 400 to move at an offset value 405 from the route 415 so that the locomotion mechanisms (e.g., 430) avoid the ruts 410. The resulting route may be referred to as a modified route 420. Note that, even when a vehicle (e.g., 400) travels along a modified route (e.g., 420), the vehicle may still be considered to be traveling along the original route (e.g., 415), even if the vehicle is not traveling centered on the original route, since the modified route is offset from the original route.

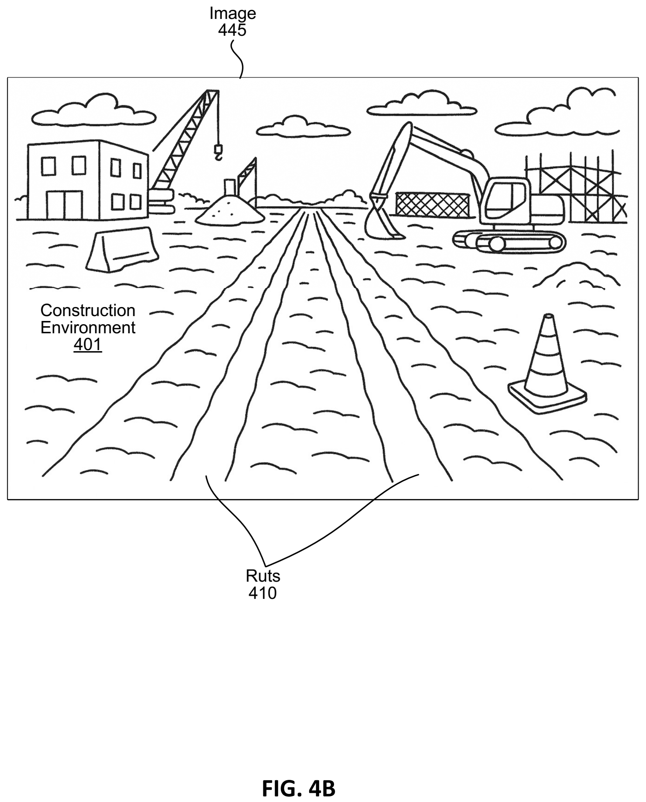

FIG. 4B is an example image 445 of the construction environment 401 in front of the 400. The image 445 was captured by the image sensor 425. The control system 435 may apply the image 445 to a rut identification module to identify the ruts 410. The control system may then determine the offset value 405 based on the identified ruts and then navigate the construction vehicle 400 in the construction environment 401 based on the offset value 405.

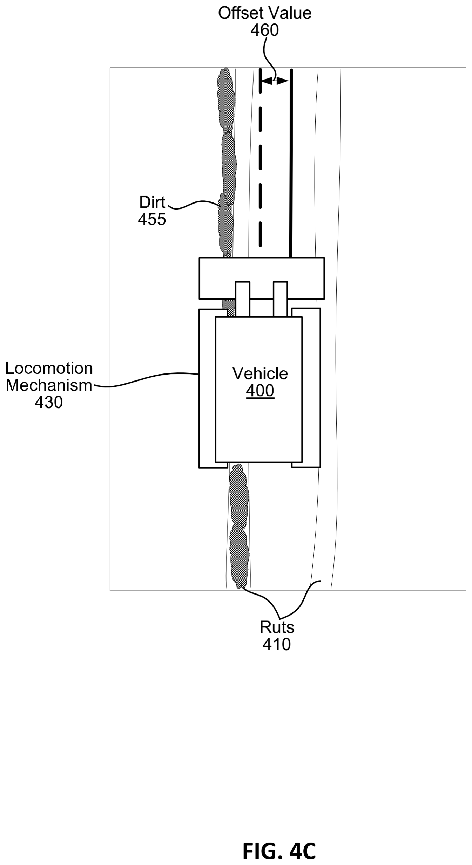

FIG. 4C a diagram of the construction vehicle 400 moving in the construction environment 401, in accordance with an example embodiment. The construction environment 401 includes dirt 455 is at or near the edge of the left rut 410. The offset value 460 results in the locomotion mechanism 430 pushing the dirt 455 into the left rut 410.

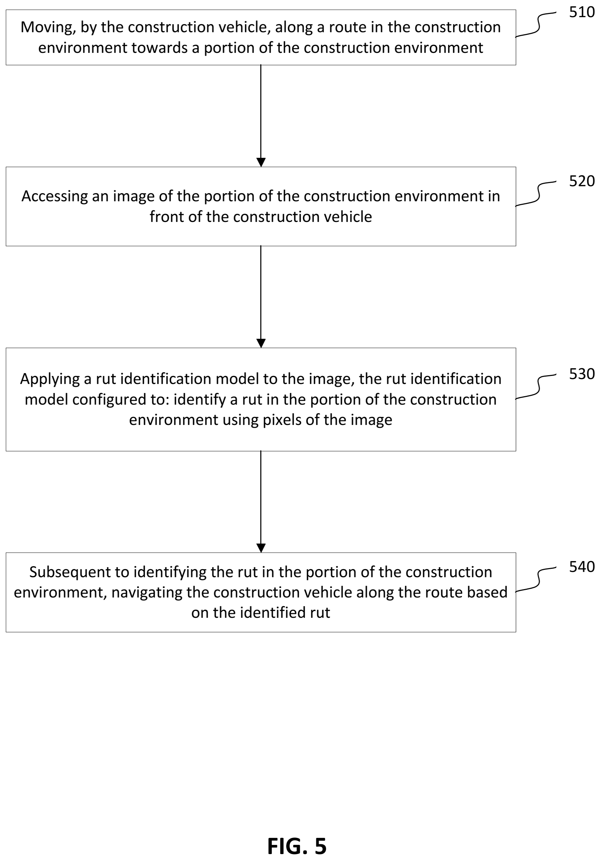

FIG.S 4A-4C are further described with respect to FIG. 5 below.

### V.B EXAMPLE METHODS OF OPERATING VEHICLE

FIG. 5 is a flow chart illustrating a method of operating a construction vehicle (e.g., 100C, 100D, 400) in a construction environment (e.g., 401), in accordance with one or more example embodiments. In the example of FIG. 5, the steps of the method are performed by the control system 130 (e.g., 435) implementing the dithering module 375, however one or more (e.g., all) of the steps may be performed by other entities or systems. In addition, other embodiments may include different, additional, or fewer steps, and the steps may be performed in different orders. In some embodiments, instructions to implement one or more steps of the method of FIG. 5 are stored on one or more (e.g., non-transitory) computer-readable storage mediums, and the control system 130 executes the stored instructions to implement one or more steps of the method.

At step 510, the control system 130 controls the construction vehicle (e.g., 400) to move along a route (e.g., 415) in the construction environment towards a portion (e.g., 417) of the construction environment. For example, the vehicle is moving along the environment to perform a construction action in the environment (or is actively performing a construction action in the environment).

At step 520, the control system 130 accesses an image (e.g., 445) of the portion of the construction environment in front of the construction vehicle (e.g., the image was captured by the image sensor 425).

At step 530, the control system 130 applies a rut identification model (e.g., 380) to the image. The rut identification model is configured to identify a rut (e.g., one or both of the ruts 410) in the portion of the construction environment using pixels of the image (the rut may extend along the route in the portion of the environment). The rut identification model may be trained to identify a rut with a depth more than a threshold depth. Output of the rut identification model may be the image with a label indicated which pixels indicate a rut.

At step 540, subsequent (e.g., responsive) to the control system 130 identifying the rut in the portion of the construction environment (e.g., subsequent to the image including a label of a rut in the portion of the environment), the control system 130 navigates the construction vehicle along the route based on the identified rut. Among other advantages, navigating based on the identified rut may enable the vehicle to perform a construction action in the environment (e.g., not considering the rut may hinder or prevent the vehicle from performing the construction action). For example, the vehicle is carrying material or equipment to a destination and entering the rut may hinder the vehicle's ability to reach the destination. In another example, entering a rut may tilt the vehicle enough that the vehicle cannot properly perform construction actions in the environment.

Navigating the construction vehicle along the route may include the control system 130 navigating the construction vehicle to travel at an offset value (e.g., 405) from the route (e.g., one meter to the left of the route). The offset value may be based on (e.g., the location of) the identified rut (e.g., such that a locomotion mechanism (e.g., 430) enters, partially enters, is positioned along the boundary of, or does not enter the rut). As previously stated, even if the construction vehicle travels at the offset from the route, the vehicle may still be considered to be "traveling along the route."

The control system 130 may have access to or calculate the spatial relationship between the image sensor that captured the image and a locomotion mechanism of the construction vehicle (e.g., the location and orientation of the image sensor on the vehicle relative to the locomotion mechanism). Thus, the control system 130 may use this special relationship and the location of the identified rut in the image to determine the location of the rut relative to the locomotion mechanism. The control system 130 may then determine the offset value using the location of the rut relative to the locomotion mechanism.

In some scenarios or embodiments, the control system 130 navigates the construction vehicle such that a locomotion mechanism enters the identified rut (e.g., and continues to stay in the rut as the construction vehicle traverses the environment). For example, the portion of the environment is more stable or predictable in the rut or the vehicle can move faster or more efficiently in the rut. In these scenarios, an offset value (e.g., 405) may be determined (or adjusted) so the locomotion mechanism moves into the rut.

In some other scenarios or embodiments, the control system 130 navigates the construction vehicle such that the locomotion mechanism (or both mechanisms) avoids the identified rut (e.g., and continues to avoid the rut as the construction vehicle traverses the environment). Avoiding a rut may refer to the vehicle not entering the rut at all and possibly continuing to not enter the rut as the construction vehicle traverses the environment. Among other advantages, avoiding a rut may reduce or prevent further defining or deepening of the rut. Avoiding a rut may also reduce wear and tear on the vehicle. To avoid a rut, the control system 130 may determine an offset value from the route large enough such that the locomotive mechanism avoids the rut (e.g., such that the outer edge of the locomotion mechanism is at least a threshold distance away from the edge of the rut).

In some embodiments, the offset value is updated dynamically (e.g., in real-time) as the construction vehicle moves along the route in the environment. For example, the control system 130 identifies the (e.g., real-time) locations of the rut as the vehicle moves in the environment, determines updated offset values based on the updated locations of the rut, and controls navigation of the vehicle based on the updated offset values. For example, at step 510, the construction vehicle moves at a first offset value from the route, and, at step 540, the control system 130 navigates the construction vehicle to travel at a second offset value from the route different than the first offset value, where the second offset value is based on the (e.g., location of the) identified rut (e.g., such that a locomotion mechanism enters partially enters, is positioned along the boundary of, or does not enter the rut). The control system 130 may determine updated locations of a rut relative to a locomotion mechanism by applying subsequent images of the environment (captured by the image sensor) to the rut identification module.

The offset value may be based on a random value e.g., if a portion of the environment is expected to receive a lot of traffic by the vehicle and/or other vehicles. In another example, offset values may be based on a pattern, such as a zigzag pattern or a sinusoidal pattern (e.g., a set of determined offset values follow the pattern relative to the route). Among other advantages, an offset value based on a random value or a pattern may reduce or prevent (a) the formation of a new rut and (b) further defining or deepening of a preexisting rut. If the environment includes no ruts (e.g., the rut identification module does not identify a rut in an image), the offset values may be random values or follow a pattern (e.g., but within a threshold range that keeps the vehicle within a predetermined virtual corridor). If the environment includes a rut (e.g., the rut identification module identifies a rut in an image), the control system 130 may determine an initial offset value such that the locomotion mechanism avoids (or enters) a rut and then modify the initial offset value based on a random value (e.g., by a random percentage) or based on a pattern. However, the modification may be bounded (e.g., by maximum or minimum thresholds) such that the modified offset value still achieves the original purpose of the locomotion mechanism avoiding (or entering) the rut. Additionally, or alternatively, the modification may be bounded such that the vehicle remains within a predetermined virtual corridor as it travels in the environment.

In some embodiments, the offset value is based on offset values used by vehicles that previously traveled along the route or are expected to travel along the route. This may reduce or prevent locomotion mechanisms of multiple vehicles traversing over the same part of the environment. Among other advantages, this may prevent or reduce: (a) the formation of a new rut and (b) further defining or deepening of a preexisting rut. For example, the offset value from the route is further based on a second offset value from the route that a second vehicle previously traveled, where the offset value from the route is different than the second offset value from the route.

In some embodiments, the offset value from the route directs a locomotion mechanism of the construction vehicle to push material into the identified rut. For example, the offset value results in a locomotion mechanism being near enough to a rut that material at the edge of the rut gets pushed into the rut by the locomotion mechanism. For example, see FIG. 4C, where dirt 455 is at or near the edge of the left rut 410, and the offset value 460 results in the locomotion mechanism 430 pushing the dirt 455 into the left rut 410. Subsequent vehicles may be instructed to detect whether the left rut 410 is still present. If the left rut is still present, another vehicle (e.g., a grader or dozer) may be instructed to remove (e.g., fill in) the rut.

In some embodiments, the construction vehicle determines whether the vehicle has entered or not entered a route based on sensor data (e.g., from an inertial measurement unit (IMU) of the vehicle). The control system 130 may use this determination as it navigates the construction vehicle. For example, (e.g., as the construction vehicle traversed through the portion of the construction environment) the control system 130 accesses sensor data generated from an inertial measurement unit (IMU) of the construction vehicle, and identifies, based on the sensor data, whether the construction vehicle has entered the rut, where navigating the construction vehicle along the route (step 540) is further based on the identification of whether the construction vehicle entered the rut. For example, if the control system 130 determined an offset value to avoid a rut but IMU sensor data indicates the locomotion mechanism is near, is entering, or has entered the rut, the control system 130 may update the offset value (e.g., increase it) to move the locomotion mechanism away from the rut. Similarly, if the control system 130 determined an offset value to enter a rut but IMU sensor data indicates the locomotion mechanism is not in the rut, the control system 130 may update the offset value (e.g., decrease it) to move the locomotion mechanism toward the rut. In addition to, or alternative to, IMU sensor data, images from a camera may also be used to determine whether a locomotion mechanism is in a rut. For example, if a locomotion mechanism is in a rut, the vehicle may be tilted and this tilt may be identified by analyzing an image of the environment captured by a camera (e.g., mounted to the vehicle). In another example, the vehicle may include a camera that captures images of a locomotion mechanism in contact with the environment.

In some embodiments, the control system 130 determines an offset value by: estimating that the locomotion mechanism will enter the rut when the construction vehicle traverses through the portion of the construction environment (e.g., based on the projected or expected location of the vehicle as it travels along the route), and calculating an offset value from the route that will result in the locomotion mechanism not entering the rut.

In some embodiments, the construction vehicle is configured to perform a construction action on ruts in the identified environment (e.g., to fill identified ruts). Thus, step 540 may include navigating the vehicle so that the vehicle can perform the construction action on the identified rut (e.g., to bring a treatment mechanism 120 to the identified rut. The control system 130 may then control the vehicle to perform the construction action (e.g., to fill in the rut in real-time as the vehicle moves through the environment).

In some embodiments, the control system 130 incorporates feedback. For example, the control system 130 analyzes sensor data (e.g., IMU data or image data) as the vehicle continues to traverse a path to determine how well the vehicle is navigating relative to the rut. For example, if, based on sensor data, the control system 130 determines the vehicle is not avoiding a rut (or is not sufficiently offset from it), the control system 130 may adjust an offset value (e.g., increase it) based on this feedback. In another example, the control system 130 applied an offset value for a locomotion mechanism to enter a rut, but, based on sensor data, the control system 130 determines the locomotion mechanism is not in the rut, the control system 130 may adjust an offset value based on this feedback. In some embodiments, the dithering module 375 is updated based on sensor feedback e.g., to improve the accuracy of offset value determinations.

As previously stated, although the above descriptions are in the context of ruts, these teachings may be applied to potholes (e.g., replace the word "rut" with "pothole" in the steps of FIG. 5). For example, a control system may identify a pothole and navigate a vehicle based on the identified pothole. For example, the control system applies an offset value from the route so that a locomotion mechanism avoids an identified pothole. In another example, the control system applies an offset value from the route so that a locomotion mechanism pushes material (e.g., dirt) into a pothole.

Although some steps of the above method are performed using an image (e.g., captured by an image sensor), other types of sensor information may be used to identify ruts in an environment, such as radar (radio detection and ranging) or LIDAR (Light Detection and Ranging). For example, the construction vehicle includes a LIDAR or radar system and ruts are identified using one or both of those systems. For example, a radar system is used to perform plane estimation of the external environment. In another example, the LIDAR system is used to determine the contours of the portion of the environment in front of the vehicle. In another example, the rut identification model (or a rut identification module) is trained to identify ruts from output from the LIDAR or radar sensor.

Furthermore, although the above descriptions are in the context of analyzing an image of the environment in front of the vehicle, images capturing other portions of the environment may additionally, or alternatively, be accessed (e.g., by image sensors mounted to different sides of the environment), analyzed (e.g., to identify ruts), and used generally used to navigate the construction vehicle in the environment. For example, if the construction vehicle is backing up (by driving in reverse), an image captured by a rear-view image sensor may analyzed by the rut identification model to identify any ruts behind the vehicle, and the control system 130 may control the reverse driving of the vehicle based on any identified ruts behind the vehicle. Separately, an image from other image sensor (e.g., on the vehicle) may be analyzed to confirm any rut identifications made using an image from an image sensor facing the front of the vehicle.

Furthermore, although the above descriptions are in the context of a construction vehicle operating in a construction environment, these teachings are not limited to this context. For example, the steps of FIG. 5 may be performed by or applicable to other types of vehicles (e.g., 100A, 100B, 100E, and 100F) operating in other types of environments (e.g., farming, mining, landscaping, and forestry environments).

Other aspects include components, devices, systems, improvements, methods, processes, applications, (e.g., non-transitory) computer readable mediums, and other technologies related to any of the above.

### X. COMPUTER SYSTEM

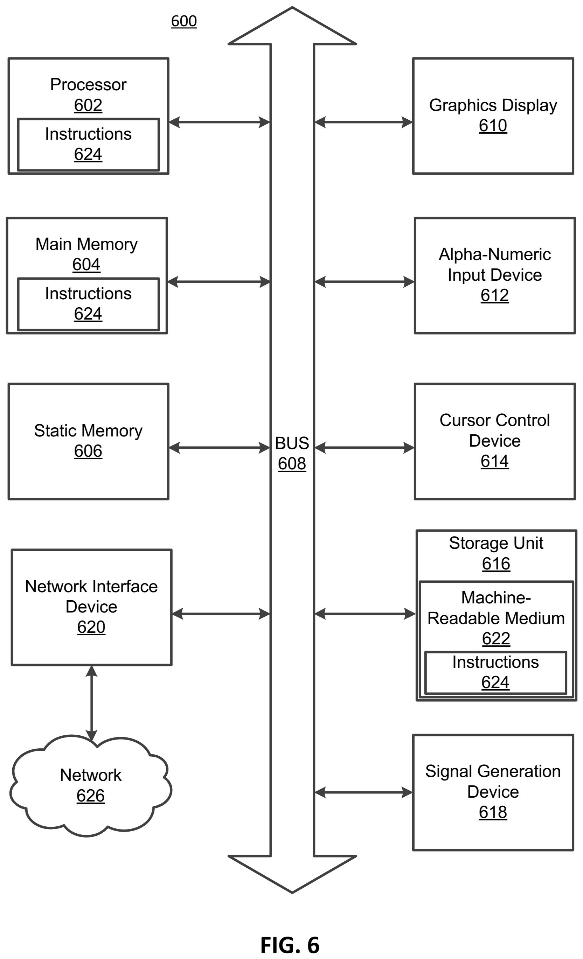

FIG. 6 is a block diagram illustrating components of an example machine for reading and executing instructions from a (e.g., non-transitory) machine-readable medium, in accordance with an example embodiment. Specifically, FIG. 6 shows a diagrammatic representation of control system 130 in the example form of a computer system 600. The computer system 600 can be used to execute instructions 624 (e.g., program code or software) for causing the machine to perform any one or more of the methodologies (or processes) described herein (e.g., any of the steps of FIG 5). In alternative embodiments, the machine operates as a standalone device or a connected (e.g., networked) device that connects to other machines. In a networked deployment, the machine may operate in the capacity of a server machine or a client machine in a server-client network environment, or as a peer machine in a peer-to-peer (or distributed) network environment.

The machine may be a server computer, a client computer, a personal computer (PC), a tablet PC, a set-top box (STB), a smartphone, an internet of things (IoT) appliance, a network router, switch or bridge, or any machine capable of executing instructions 624 (sequential or otherwise) that specify actions to be taken by that machine. Further, while only a single machine is illustrated, the term "machine" shall also be taken to include any collection of machines that individually or jointly execute instructions 624 to perform any one or more of the methodologies discussed herein.

The example computer system 600 includes one or more processing units (generally processor 602). If the computer system 600 includes multiple processing units, the processing units may operate collectively or individually to perform one or more operations. The processor 602 is, for example, one or more central processing units (CPUs), one or more graphics processing units (GPUs), one or more digital signal processors (DSPs), one or more a state machines, one or more application specific integrated circuits (ASICs), one or more radiofrequency integrated circuits (RFICs), or any combination of these. The computer system 600 also includes a main memory 604. The computer system may include a storage unit 616. The processor 602, memory 604, and the storage unit 616 communicate via a bus 608.

In addition, the computer system 600 can include a static memory 606, a graphics display 610 (e.g., to drive a plasma display panel (PDP), a liquid crystal display (LCD), or a projector). The computer system 600 may also include alphanumeric input device 612 (e.g., a keyboard), a cursor control device 614 (e.g., a mouse, a trackball, a joystick, a motion sensor, or other pointing instrument), a signal generation device 618 (e.g., a speaker), and a network interface device 620, which also are configured to communicate via the bus 608.

The storage unit 616 includes a machine-readable medium 622 on which is stored instructions 624 (e.g., software) embodying any one or more of the methodologies or functions described herein. For example, the instructions 624 may include the functionalities of modules of the system 130 described in FIG. 3. The instructions 624 may also reside, completely or at least partially, within the main memory 604 or within the processor 602 (e.g., within a processor's cache memory) during execution thereof by the computer system 600, the main memory 604 and the processor 602 also constituting machine-readable media. The instructions 624 may be transmitted or received over a network 626 via the network interface device 620.

### XI. ADDITIONAL CONSIDERATIONS

In the description above, for purposes of explanation, numerous specific details are set forth in order to provide a thorough understanding of the illustrated system and its operations. It will be apparent, however, to one skilled in the art that the system can be operated without these specific details. In other instances, structures and devices are shown in block diagram form in order to avoid obscuring the system.

Reference in the specification to "one embodiment" or "an embodiment" means that a particular feature, structure, or characteristic described in connection with the embodiment is included in at least one embodiment of the system. The appearances of the phrase "in one embodiment" in various places in the specification are not necessarily all referring to the same embodiment.

Some portions of the detailed descriptions are presented in terms of algorithms or models and symbolic representations of operations on data bits within a computer memory. An algorithm is here, and generally, conceived to be steps leading to a desired result. The steps are those requiring physical transformations or manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Some of the operations described herein are performed by a computer physically mounted within a vehicle 100. This computer may be specially constructed for the required purposes, or it may comprise a general-purpose computer selectively activated or reconfigured by a computer program stored in the computer. Such a computer program may be stored in a computer readable storage medium, such as, but is not limited to, any type of disk including floppy disks, optical disks, CD-ROMs, and magnetic-optical disks, read-only memories (ROMs), random access memories (RAMs), EPROMs, EEPROMs, magnetic or optical cards, or any type of non-transitory computer readable storage medium suitable for storing electronic instructions.

The figures and the description above relate to various embodiments by way of illustration only. It should be noted that from the following discussion, alternative embodiments of the structures and methods disclosed herein will be readily recognized as viable alternatives that may be employed without departing from the principles of what is claimed.

One or more embodiments have been described above, examples of which are illustrated in the accompanying figures. It is noted that wherever practicable similar or like reference numbers may be used in the figures and may indicate similar or like functionality. The figures depict embodiments of the disclosed system (or method) for purposes of illustration only. One skilled in the art will readily recognize from the following description that alternative embodiments of the structures and methods illustrated herein may be employed without departing from the principles described herein.

Some embodiments may be described using the expression "coupled" and "connected" along with their derivatives. It should be understood that these terms are not intended as synonyms for each other. For example, some embodiments may be described using the term "connected" to indicate that two or more elements are in direct physical or electrical contact with each other. In another example, some embodiments may be described using the term "coupled" to indicate that two or more elements are in direct physical or electrical contact. The term "coupled," however, may also mean that two or more elements are not in direct physical or electrical contact with each other, but yet still co-operate or interact with each other. The embodiments are not limited in this context.

As used herein, the terms "comprises," "comprising," "includes," "including," "has," "having" or any other variation thereof, are intended to cover a non-exclusive inclusion. For example, a process, method, article or apparatus that comprises a list of elements is not necessarily limited to only those elements but may include other elements not expressly listed or inherent to such process, method, article or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B is true (or present).

In addition, use of the "a" or "an" are employed to describe elements and components of the embodiments herein. This is done merely for convenience and to give a general sense of the system. This description should be read to include one or at least one and the singular also includes the plural unless it is obvious that it is meant otherwise.

Upon reading this disclosure, those of skill in the art will appreciate still additional alternative structural and functional designs for a system and a process for identifying and treating plants with a farming machine including a control system executing a semantic segmentation model. Thus, while particular embodiments and applications have been illustrated and described, it is to be understood that the disclosed embodiments are not limited to the precise construction and components disclosed herein. Various modifications, changes and variations, which will be apparent to those, skilled in the art, may be made in the arrangement, operation and details of the method and apparatus disclosed herein without departing from the spirit and scope defined in the appended claims.

## Claims

1. A method of operating a construction vehicle in a construction environment, the method comprising:
moving, by the construction vehicle, along a route in the construction environment towards a portion of the construction environment;
accessing an image of the portion of the construction environment in front of the construction vehicle;
applying a rut identification model to the image, the rut identification model configured to:
identify a rut in the portion of the construction environment using pixels of the image; and
subsequent to identifying the rut in the portion of the construction environment, navigating the construction vehicle along the route based on the identified rut.

2. The method of claim 1, wherein navigating the construction vehicle along the route based on the identified rut comprises navigating the construction vehicle such that a locomotion mechanism enters the identified rut.

3. The method of claim 1, wherein navigating the construction vehicle along the route based on the identified rut comprises navigating the construction vehicle such that a locomotion mechanism avoids the identified rut.

4. The method of any of claims 1 to 3, wherein navigating the construction vehicle along the route based on the identified rut comprises:
navigating the construction vehicle to travel at an offset value from the route.

5. The method of claim 4, further comprising: dynamically updating the offset value from the route based on a location of the rut in the portion of the construction environment.

6. The method of claim 4 or 5, wherein:
the offset value is further based on a random value; or
the offset value from the route is further based on a second offset value from the route that a second vehicle previously traveled, wherein the offset value from the route is different than the second offset value from the route; or
the offset value from the route directs a locomotion mechanism of the construction vehicle to push material into the identified rut.

7. The method of any of claims 1 to 3:
wherein moving, by the construction vehicle, along the route in the construction environment towards the portion of the construction environment comprises the construction vehicle moving at a first offset value from the route; and
wherein navigating the construction vehicle along the route based on the identified rut comprises navigating the construction vehicle to travel at a second offset value from the route different than the first offset value, wherein the second offset value is based on the identified rut.

8. The method of any of claims 1 to 7, further comprising:
accessing sensor data generated from an inertial measurement unit (IMU) of the construction vehicle; and
identifying, based on the sensor data, whether the construction vehicle has entered the rut,
wherein navigating the construction vehicle along the route is further based on the identification of whether the construction vehicle entered the rut.

9. A construction vehicle configured to:
move along a route in a construction environment towards a portion of the construction environment;
access an image of the portion of the construction environment in front of the construction vehicle;
apply a rut identification model to the image, the rut identification model configured to:
identify a rut in the portion of the construction environment using pixels of the image; and
subsequent to an identification of the rut in the portion of the construction environment, navigate the construction vehicle along the route based on the identified rut.

10. The construction vehicle of claim 9, wherein:
to navigate the construction vehicle along the route based on the identified rut, the construction vehicle is configured to navigate the construction vehicle such that a locomotion mechanism enters the identified rut; or
to navigate the construction vehicle along the route based on the identified rut, the construction vehicle is configured to navigate the construction vehicle such that a locomotion mechanism avoids the identified rut.

11. The construction vehicle of claim 9 or 10, wherein to navigate the construction vehicle along the route based on the identified rut, the construction vehicle is configured to:
navigate the construction vehicle to travel at an offset value from the route, wherein the offset value is based on the identified rut.

12. The construction vehicle of claim 11, wherein the construction vehicle is further configured to dynamically update the offset value from the route based on a location of the rut in the portion of the construction environment.

13. The construction vehicle of claim 11 or 12, wherein:
the offset value is further based on a random value; or
the offset value from the route is further based on a second offset value from the route that a second vehicle previously traveled, wherein the offset value from the route is different than the second offset value from the route; or
the offset value from the route directs a locomotion mechanism of the construction vehicle to push material into the identified rut.

14. The construction vehicle of claim 9 or 10:
wherein to move along the route in the construction environment towards the portion of the construction environment, the construction vehicle is configured to move at a first offset value from the route; and
wherein to navigate the construction vehicle along the route based on the identified rut, the construction vehicle is configured to navigate the construction vehicle to travel at a second offset value from the route different than the first offset value, wherein the second offset value is based on the identified rut.

15. One or more non-transitory computer-readable storage mediums storing instructions that, when executed by one or more computing devices, cause the one or more computing devices to carry out the method of any of claims 1 to 8.
